# EUROPEAN PATENT SPECIFICATION

(11) **EP 4 310 510 B1**
(45) Date of publication and mention of the grant of the patent: **02.09.2026**
(21) Application number: 22770920.1
(22) Date of filing: 03.02.2022
(51) Int. Cl.: G01N 35/04, G01N 1/38, G01N 35/00, G01N 1/40, G01N 30/24, G01N 30/06

(54) **PRE-PROCESSING DEVICE AND PRE-PROCESSING METHOD**
VORVERARBEITUNGSVORRICHTUNG UND VORVERARBEITUNGSVERFAHREN
DISPOSITIF DE PRÉTRAITEMENT ET PROCÉDÉ DE PRÉTRAITEMENT

(30) Priority: 18.03.2021 JP 2021045153
(43) Date of publication of application: 24.01.2024
(73) Proprietor: Shimadzu Corporation, Nakagyo-ku, Kyoto-shi, Kyoto 604-8511 (JP)
(72) Inventor: MATSUMOTO, Kenta, Kyoto-shi, Kyoto 604-8511 (JP)
(74) Representative: Müller-Boré & Partner Patentanwälte PartG mbB
(86) International application number: PCT/JP2022/004321
(87) International publication number: WO 2022/196160

(56) References cited:
- JP-A- 2007 033 414
- JP-A- 2015 161 528
- JP-A- 2015 161 528
- JP-A- H02 283 279
- US-A1- 2012 206 713
- US-A1- 2016 363 604

## Description

### [Technical Field]

The present invention relates to a pre-processing device and a pre-processing method.

### [Background Art]

An analysis device has been known as a device that performs various analyses on a sample. For example, Patent Document 1 describes an automatic analysis system including a plurality of automatic analysis devices and a sample transport device. Each automatic analysis device includes a belt conveyor and a sampling-analyzer, and also includes a sample introduction mechanism for introducing a specimen rack on the belt conveyor to the sampling-analyzer.

In two adjacent automatic analysis devices, the starting end of the rear conveyor is arranged close to the terminal end of the front conveyor. The sample transport device includes a transport mechanism, and is arranged between the front conveyor and the rear conveyor. The transport mechanism of the specimen transport device holds the specimen rack at the terminal end of the front conveyor and conveys the rack to the starting end of the rear conveyor.

JP 2015 161528 A describes a high-throughput, inexpensive and automated sample pretreatment device dispensing with a plurality of cap-closing/cap-opening mechanisms.

US 2016/363604 A1 describes an automated analyzer which maintains high processing capacity and dispensation accuracy even when items requiring dilution/pretreatment and general reaction measurement are mixed.

US 2012/206713 A1 describes an examination device and an examination method that can efficiently perform examination even when both whole blood and serum/blood plasma specimens are to be examined.
[Patent Document 1] JP 2015-1460 A

### [Summary of Invention]

### [Technical Problem]

Pre-processing may be performed on a sample before the sample is analyzed in an analysis device. Similarly to the analysis of a sample, it is desired that the pre-processing for a sample is performed automatically. However, since the pre-processing includes a large number of processes, it is not easy to perform the pre-processing on a large number of samples while improving a throughput.

An object of the present invention is to provide a pre-processing device and a pre-processing method that enable execution of pre-processing on a large number of samples while improving a throughput. The present invention is defined by the independent claims. Preferred examples are defined in the dependent claims.

### [Advantageous Effects of Invention]

With the present invention, it is possible to perform pre-processing on a large number of sample while improving a throughput.

### [Brief Description of the Drawings]

[FIG. 1] Fig. 1 is a schematic diagram showing the pre-processing device according to one embodiment of the present invention.
[FIG. 2] Fig. 2 is a time table showing the operations of a first adding unit and a second adding unit.
[FIG. 3] Fig. 3 is a diagram showing the time table of a first modified example.
[FIG. 4] Fig. 4 is a diagram showing the time table of a second modified example.
[FIG. 5] Fig. 5 is a diagram showing the time table of a third modified example.
[FIG. 6] Fig. 6 is a diagram for explaining the operations of the first adding unit and the second adding unit in a first period.
[FIG. 7] Fig. 7 is a diagram for explaining the operations of the first adding unit and the second adding unit in a second period.
[FIG. 8] Fig. 8 is a diagram for explaining the operations of the first adding unit and the second adding unit in a third period.
[FIG. 9] Fig. 9 is a diagram for explaining the operations of the first adding unit and the second adding unit in the third period.
[FIG. 10] Fig. 10 is a diagram for explaining the operations of the first adding unit and the second adding unit in a fourth period.
[FIG. 11] Fig. 11 is a diagram for explaining the operations of a centrifugation unit and a transport unit.
[FIG. 12] Fig. 12 is a diagram for explaining the operations of the centrifugation unit and the transport unit.
[FIG. 13] Fig. 13 is a diagram for explaining the operations of the centrifugation unit and the transport unit.
[FIG. 14] Fig. 14 is a diagram showing the entire process of the pre-processing performed by the pre-processing device.
[FIG. 15] Fig. 15 is a flowchart showing a first process.
[FIG. 16] Fig. 16 is a flowchart showing a first process.
[FIG. 17] Fig. 17 is a flowchart showing a second process.
[FIG. 18] Fig. 18 is a flowchart showing a third process.
[FIG. 19] Fig. 19 is a flowchart showing the third process.
[FIG. 20] Fig. 20 is a flowchart showing a fourth process.
[FIG. 21] Fig. 21 is a flowchart showing a fifth process.

### [Description of Embodiments]

### (1) Configuration of Pre-processing Device

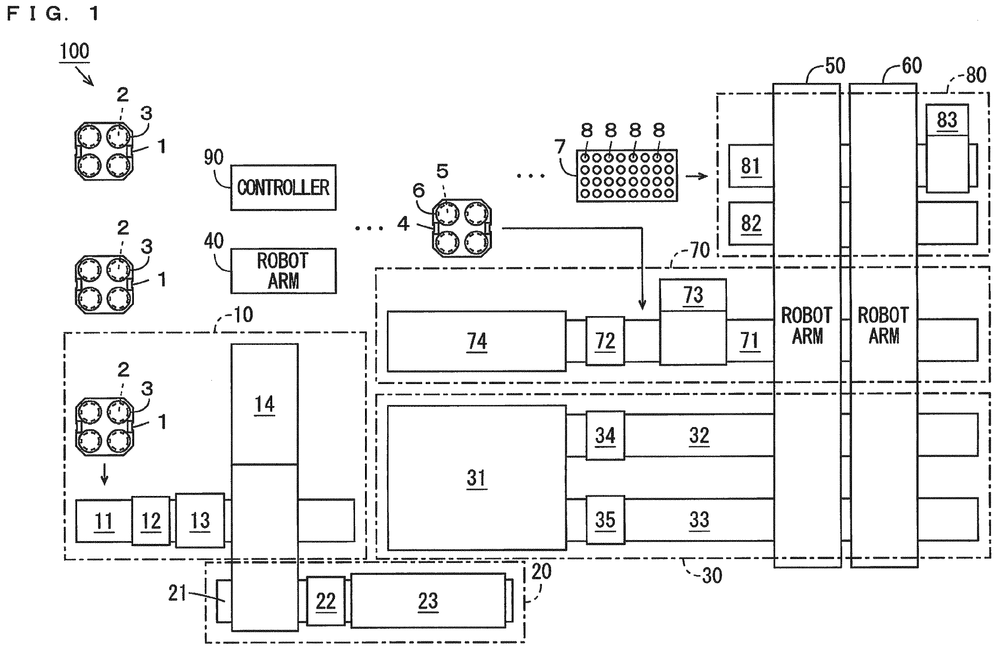

A pre-processing device according to embodiments of the present invention will be described below in detail with reference to the drawings. Fig. 1 is a schematic diagram showing the pre-processing device according to one embodiment of the present invention. As shown in Fig. 1, a plurality of racks 1, a plurality of racks 4 and a plurality of racks 7 are introduced into the pre-processing device 100. Each rack 1 holds a plurality (four in the present example) of sample bottles 2. A sample bottle 2 is a centrifuge tube, for example, and contains a sample. A screw-type cap 3 is attached to the upper portion of each sample bottle 2. Each rack 4 holds a plurality of dSPE (distributed solid phase extraction) tubes 5. A screw-type cap 6 is attached to the upper portion of each dSPE tube 5. A rack 7 holds a plurality of vials 8.

The pre-processing device 100 performs pre-processing on a sample in each sample bottle 2 held in the rack 1 using the QuEChERS method. Further, the pre-processing device 100 supplies a pre-processed sample to an analysis device such as a gas chromatograph (GC) or a liquid chromatograph (LC). Specifically, the pre-processing device 100 includes a first adding unit 10, a second adding unit 20, a centrifugation unit 30, robot arms 40, 50, 60, transport units 70, 80 and a controller 90.

The first adding unit 10 includes a transporter 11, an attacher-detacher 12, an adder 13 and a shaker 14. The plurality of racks 1 are sequentially introduced into the transporter 11. The transporter 11 includes a belt conveyor and transports an introduced rack 1 in one direction or its opposite direction in the first adding unit 10. The attacher-detacher 12 attaches a cap 3 to each sample bottle 2 or detaches a cap 3 from each sample bottle 2 by rotating the cap 3 of each sample bottle 2 held by the rack 1.

The adder 13 is an example of a first adder, and injects a solvent into each sample bottle 2 in the rack 1 and adds an internal standard (internal standard substance) as a first additive. The solvent is acetonitrile, for example. The plurality of racks 1 on which the processing has been performed by the adder 13 or the plurality of racks 1 on which the processing has been performed by the second adding unit 20 are sequentially introduced into the shaker 14. The shaker 14 stirs the contents of each sample bottle 2 by shaking an introduced rack 1.

The second adding unit 20 includes a transporter 21, an attacher-detacher 22 and an adder 23. The plurality of racks 1 are sequentially introduced into the transporter 21 from the first adding unit 10. The transporter 21 has the configuration similar to that of the transporter 11, and transports an introduced rack 1 in the second adding unit 20. The attacher-detacher 22 has the configuration similar to that of the attacher-detacher 12, and attaches a cap 3 to or detaches a cap 3 from each sample bottle 2 held by the rack 1. The adder 23 is an example of a second adder, and adds predetermined powder as a second additive to each sample bottle 2 in the rack 1.

The centrifugation unit 30 includes a separator 31, transporters 32, 33 and attacher-detachers 34, 35. The plurality of racks 1 are sequentially introduced into the separator 31 from the first adding unit 10. In the separator 31, the plurality (four, for example) of racks 1 are arranged at equal angular intervals. The separator 31 is an example of a first separator and includes a centrifuge. The separator 31 separates the contents of each sample bottle 2 in the plurality of racks 1 into components by applying a centrifugal force to the plurality of introduced racks 1.

The transporters 32, 33 and are examples of first and second transporters, respectively, and have the configuration similar to that of the transporter 11. The transporters 32, 33 are arranged in parallel to each other and alternately transports the plurality of racks 1 introduced into the separator 31 in the centrifugation unit 30. The attacher-detachers 34, 35 are examples of first and second attacher-detachers, respectively, and have the configuration similar to that of the attacher-detacher 12. The attacher-detachers 34, 35 are arranged to correspond to the transporters 32, 33, respectively, and attach a cap 3 to or detach a cap 3 from each sample bottle 2 held in the racks 1 respectively transported by the transporters 32, 33.

The robot arm 40 is an example of a robot arm, and holds and transports a rack 1 among the first adding unit 10, the second adding unit 20 and the centrifugation unit 30. In this case, it is possible to transport each rack 1 without causing the rack 1 to interfere with another rack 1. Thus, as described below, the processes for the plurality of racks 1 can be performed in parallel.

In the present example, the robot arm 40 includes two arm portions. One arm portion transports a rack 1 among the transporter 11, the shaker 14 and the transporter 21. The other arm portion transports a rack 1 among the transporter 11, and a transporter (not shown), the separator 31 and the transporters 32, 33 of the centrifugation unit 30.

The robot arm 50 is one example of a dispenser and is provided among the centrifugation unit 30 and the transport units 70, 80. A pipette capable of sucking a sample is attached to the robot arm 50. The robot arm 50 sucks a relatively large amount of sample as a sample for a GC from a sample bottle 2 in a rack 1 transported by the transporters 32, 33 of the centrifugation unit 30, and injects the sample into a dSPE tube 5 held by the rack 4 in the transport unit 70. Further, the robot arm 50 sucks the sample for a GC from the dSPE tube 5 after centrifugation is carried out and injects the sample into a vial 8 held by the rack 7. Thus, the sample is dispensed.

The robot arm 60 is another example of a dispenser and is provided among the centrifugation unit 30 and the transport units 70, 80. A pipette capable of sucking a sample is attached to the robot arm 60. The robot arm 60 sucks a relatively small amount of sample as a sample for an LC from a sample bottle 2 in a rack 1 transported by the transporters 32, 33 of the centrifugation unit 30, and injects the sample into a vial 8 held by the rack 7 in the transport unit 80. Thus, the sample is dispensed.

The transport unit 70 includes a transporter 71, an attacher-detacher 72, a shaker 73 and a separator 74. A plurality of racks 4 are sequentially introduced into the transporter 71. The transporter 71 has the configuration similar to that of the transporter 11. The transporter 71 transports the plurality of introduced racks 4 in the transport unit 70. Each dSPE tube 5 in a rack 4 contains a filler for removing impurities (cleanup).

The attacher-detacher 72 has the configuration similar to that of the attacher-detacher 12, and attaches a cap 6 to or detaches a cap 6 from each dSPE tube 5 held by a rack 4 by rotating the cap 6 of each dSPE tube 5 held by the rack 4. A supernatant liquid in a sample bottle 2 in a rack 1 containing a sample is dispensed into a dSPE tube 5 by the robot arm 50. The shaker 73 has the configuration similar to that of the shaker 14, and stirs the contents of a dSPE tube 5 by shaking an introduced rack 4.

The plurality of racks 4 on which the processing has been performed by the shaker 73 are sequentially introduced into the separator 74. The separator 74 is an example of a second separator and has the configuration similar to that of the separator 31. The separator 74 separates the contents of a plurality of dSPE tubes 5 in each rack 4 into components by applying a centrifugal force to the plurality of introduced racks 4. The rack 4 on which the processing has been performed by the separator 74 is transported to the robot arm 50 by the transporter 71.

The transport unit 80 includes transporters 81, 82 and a compression filtration unit 83. A plurality of racks 7 are sequentially introduced into the transporters 81, 82. The transporters 81, 82 have the configuration similar to that of the transporter 11 and are arranged in parallel to each other. The transporter 81 transports a rack 7 holding vials 8 for an LC in the transport unit 80. The transporter 82 transports a rack 7 holding vials 8 for a GC in the transport unit 80.

A supernatant liquid in a sample bottle 2 in a rack 1 including a sample is dispensed into each vial 8 for an LC in a rack 7 by the robot arm 60 in the transporter 81. A vial 8 for an LC is Mini-UniPrep, for example. Thereafter, the rack 7 is transported to the compression filtration unit 83 by the transporter 81, and compression filtration for vials 8 for an LC is carried out in the compression filtration unit 83. Thus, a sample for an LC is completed. The rack 7 holding vials 8 containing the sample for an LC is transported to an analysis device by the transporter 81.

Further, a supernatant liquid in a dSPE tube 5 for which centrifugation has been carried out in the transport unit 70 is dispensed into each vial 8 for a GC in a rack 7 by the robot arm 50 in the transporter 82. Thus, a sample for a GC is completed. A rack 7 holding vials 8 containing the sample for a GC is transported to an analysis device by the transporter 82.

The controller 90 includes a Central Processing Unit (CPU), for example. The controller 90 controls the operations of the first adding unit 10, the second adding unit 20, the centrifugation unit 30, the robot arms 40, 50, 60 and the transport units 70, 80.

### (2) Operations of Pre-processing Device

### (a) First Adding Unit and Second Adding Unit

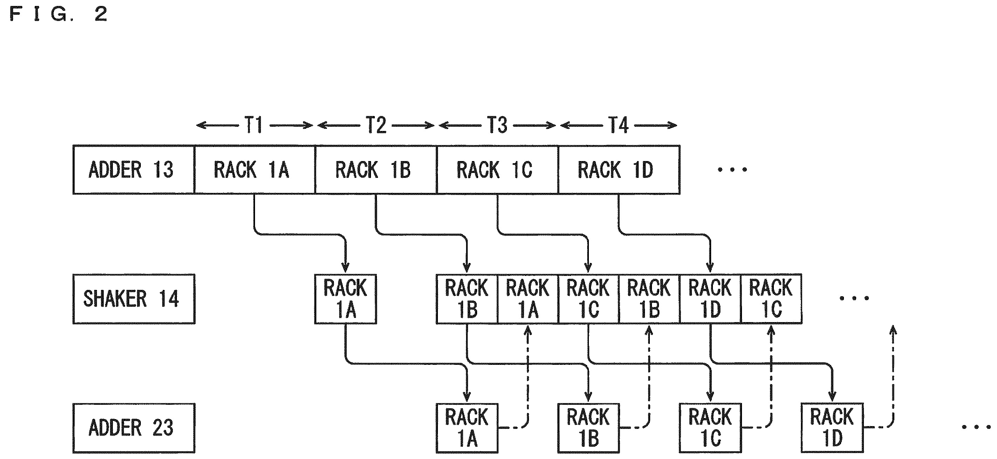

In the following description, in a case in which a plurality of racks 1 sequentially introduced into the first adding unit 10 are distinguished from one other, the plurality of racks 1 are referred to as racks 1A, 1B, 1C, 1D..., respectively. Fig. 2 is a time table showing the operations of the first adding unit 10 and the second adding unit 20. As shown in Fig. 2, in a plurality of successive periods T1 to T4, the racks 1A to 1D are respectively introduced into the first adding unit 10, and the processing for the introduced racks 1A to 1D is started.

In the present embodiment, the processing performed by the adder 13 takes a relatively long period of time. As such, in the first period T1, the processing for the rack 1A is performed by the adder 13. On the other hand, in the second period T2, during a period in which the processing for the rack 1B is performed by the adder 13, the processing for the rack 1A, which is one rack before the rack 1B, is performed by the shaker 14 in parallel.

In the third period T3, during a period in which the processing for the rack 1C is performed by the adder 13, the processing for the rack 1B, which is one rack before the rack 1C, performed by the shaker 14 and the processing for the rack 1A, which is two racks before the rack 1C, performed by the adder 23 are performed in parallel. After the processing for the rack 1B performed by the shaker 14 and the processing for the rack 1A performed by the adder 23 are finished, the processing for the rack 1A is performed by the shaker 14 while the processing for the rack 1C performed by the adder 13 is in progress.

Similarly, in the fourth period T4, during a period in which the processing for the rack 1D is performed by the adder 13, the processing for the rack 1C, which is one rack before the rack 1D, performed by the shaker 14 and the processing for the rack 1B, which is two racks before the rack 1D, performed by the adder 23 are performed in parallel. Further, after the processing for the rack 1C performed by the shaker 14 and the processing for the rack 1B performed by the adder 23 are finished, the processing for the rack 1B is performed by the shaker 14 while the processing for the rack 1D performed by the adder 13 is in progress. Thereafter, the similar operation is repeated.

Here, a period of time required for each processing in the present embodiment is described. The period of time in which addition of an internal standard by the adder 13 is carried out is preferably longer than 60 seconds. As one example, in the present embodiment, the period of time in which addition of an internal standard is carried out is 90 seconds. This is because, when 200 µL of solvent (acetonitrile, for example) containing an internal standard and 5 mL to 10 mL of solvent (acetonitrile, for example) are added, if the solvents are added in a period of time less than 60 seconds, bubbles are generated, and accuracy of a subsequent analysis performed by an analysis device such as a liquid chromatograph may be adversely affected.

However, depending on an amount of internal standard and solvent to be added, the period of time required for addition may be less than 60 seconds, such as 50 seconds. The period of time required for shaking by the shaker 14 is 60 seconds, for example. 60 seconds for this period of time is defined in the protocol for the QuEChERS method. 10 seconds is required for addition of powder by the adder 23, for example. The reason why powder can be added in a shorter period of time than the period of time required for addition of an internal standard by the adder 13 is because only a pre-measured amount of powder may be added. However, the period of time required for addition of powder by the adder 23 may be longer than 10 seconds.

The first feature of the present invention is that, during the period (T3) in which addition of an internal standard to a rack (the rack 1C, for example) by the adder 13 is carried out, shaking for a rack (the rack 1B, for example), which is one rack before the rack (the rack 1C, for example), is carried out in parallel. This can shorten the processing period of time required for the entire pre-process. In detail, as a comparative example, it is considered that, after addition of an internal standard by the adder 13 and subsequent first-time shaking by the shaker 14 are carried out for the rack 1B, for example, addition of an internal standard by the adder 13 and the first-time shaking by the shaker 14 are carried out for the next rack 1C.

This comparative example is based on the idea that addition and shaking are combined into one processing process. In this comparative example, the processing period of time is lengthened by the period of time required for the first-time shaking by the shaker 14. In contrast, with the present invention, as described above, addition of an internal standard by the adder 13 to the rack 1C, which is one rack after the rack 1B, is carried out in parallel with the first-time shaking for the rack 1B, which is one rack before the rack C1, by the shaker 14. Thus, the processing period of time can be shortened by the period of time required for the first-time shaking by the shaker 14.

Another feature of the present invention is that, during the period in which addition of an internal standard to a rack (the rack 1C, for example) by the adder 13 is carried out, and after the first-time shaking for a rack (the rack 1B, for example), which is one rack before the rack 1C, by the shaker 14 is finished, the second-time shaking for a rack (the rack 1A, for example), which is two racks before the rack 1C, by the shaker 14 is carried out.

In this manner, it is possible to further shorten the processing period of time by carrying out the first-time shaking and the second-time shaking by the shaker 14 in parallel during the period in which addition of an internal standard to a rack (the rack 1C, for example) by the adder 13 is carried out. Such a processing is enabled because, as described above, the period of time (90 seconds, for example) required for addition of an internal standard by the adder 13 is longer than the period of time (60 seconds, for example) required for shaking by the shaker 14.

Actually, in order to match the period of time required for addition of an internal standard by the adder 13 with the period of time required for shaking by the shaker 14 multiplied by 2, a waiting period of time of 30 seconds is provided after the addition of an internal standard is carried out in the adder 13. Therefore, although the processing period of time takes longer by 30 seconds, because both of the first-time shaking and the second-time shaking can be alternately carried out by the one shaker 14, it is not necessary to separately provide a shaker for carrying out the first-time shaking and a shaker for carrying out the second-time shaking in contrast. Thus, it is possible to obtain additional effects such as a reduction in number of components, a reduction in cost and a reduction in size of the entire device.

In a case in which the period of time required for addition of an internal standard by the adder 13 is 50 seconds, for example, and the period of time required for shaking by the shaker 14 is 60 seconds, for example, in order to match the period of time required for addition of an internal standard by the adder 13 with the period of time required for shaking by the shaker 14 multiplied by 2, a waiting period of time of 70 seconds is provided after addition of an internal standard.

Further, before the second-time shaking for a rack (the rack 1A, for example), which is two racks before a rack (the rack 1C), by the shaker 14 is carried out, second addition to the rack (the rack 1A, for example), which is two racks before the rack 1C, needs to be finished. As one example, in the present embodiment, second addition to a rack (the rack 1A, for example), which is two racks before a rack (the rack 1C), by the adder 23 is carried out during a period in which addition of an internal standard to the rack (the rack 1C, for example) by the adder 13 is carried out and in parallel with the first-time shaking of a rack (the rack 1B, for example), which is one rack before the rack (the rack 1C), by the shaker 14. Therefore, immediately after the second addition to the rack (the rack 1A, for example), which is two racks before the rack (the rack 1C), by the adder 23, the rack (the rack 1A, for example), which is two racks before the rack (the rack 1C), can be shaken by the shaker 14, so that it is possible to prevent powder from being solidified. Shaking immediately after addition of powder is also prescribed in the protocol of the QuEChERS method.

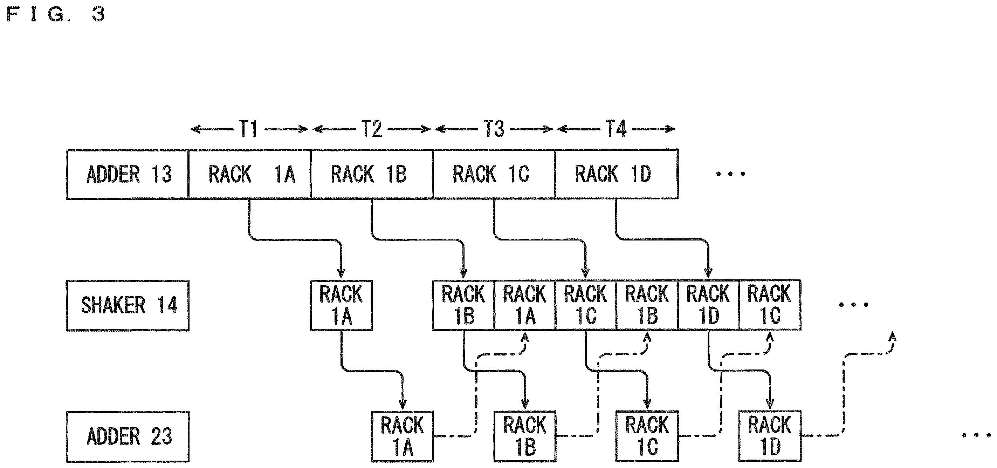

Next, modified examples of the timetable will be described. Fig. 3 is a diagram showing the time table of the first modified example. As described above, it is preferable to carry out the second-time shaking by the shaker 14 immediately after the addition of powder by the adder 23 in order to prevent the added powder from being solidified. However, depending on an amount of powder to be added, as long as it is a short period of time, it is possible to provide a waiting period of time after addition of powder by the adder 23 until the second-time shaking by the shaker 14.

As such, as shown in Fig. 3, in the first modified example, as compared with the timetable of Fig. 2, a change is made such that second addition to a rack (the rack 1A, for example) by the adder 23 is carried out before addition of an internal standard to a rack (the rack 1C, for example) by the adder 13 is started. Specifically, the second addition to the rack (the rack 1A, for example) by the adder 23 is carried out during addition of an internal standard to a rack (the rack 1B, for example) by the adder 13, or while the adder 13 waits (that is, during the period T2) after the addition of an internal standard to the rack (the rack 1B, for example) by the adder 13.

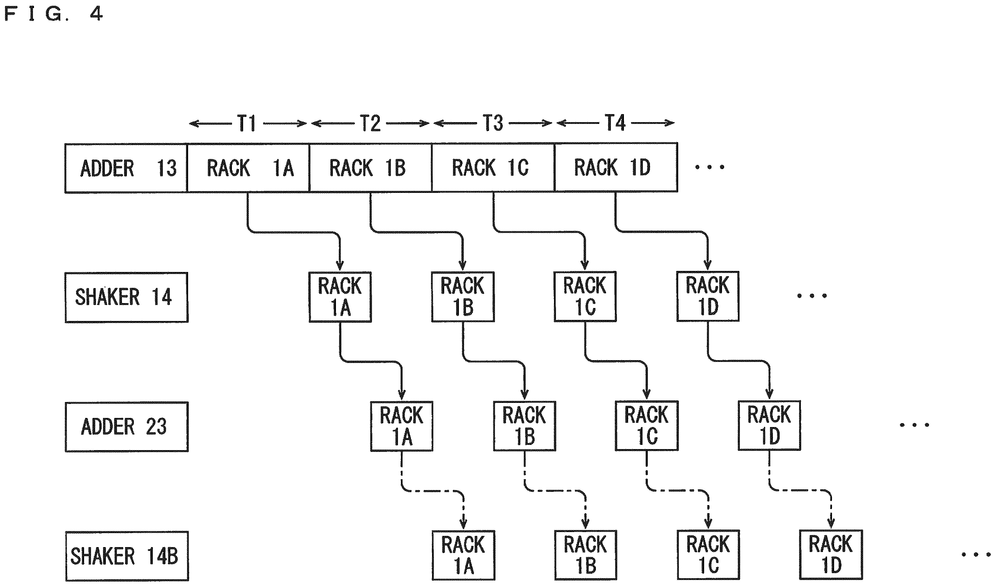

Fig. 4 is a diagram showing the time table of a second modified example. In Figs. 2 and 3, the first-time shaking and the second-time shaking are carried out only by the one shaker 14. On the other hand, as shown in Fig. 4, in the second modified example, as compared with Fig. 3, a dedicated shaker 14B for carrying out the second-time shaking is separately provided. Before addition of an internal standard to a rack (the rack 1C, for example) by the adder 13 is started (to be specific, in parallel with addition of an internal standard to a rack (the rack 1B, for example), which is one rack before the rack (the rack 1C), by the adder 13), addition of powder to a rack (the rack 1A, for example), which is two racks before the rack (the rack 1C) by the adder 23 is carried out.

Subsequently, during addition of an internal standard to a rack (the rack 1C, for example) by the adder 13, shaking of a rack (the rack 1B, for example) by the shaker 14 and shaking of the rack (a rack 1A, for example) by the shaker 14B are carried out in parallel with each other. Further, during addition of an internal standard to a rack (the rack 1C, for example) by the adder 13 and after shaking of a rack (the rack 1B, for example) by the shaker 14, addition of powder to the rack (the rack 1B, for example) by the adder 23 is carried out.

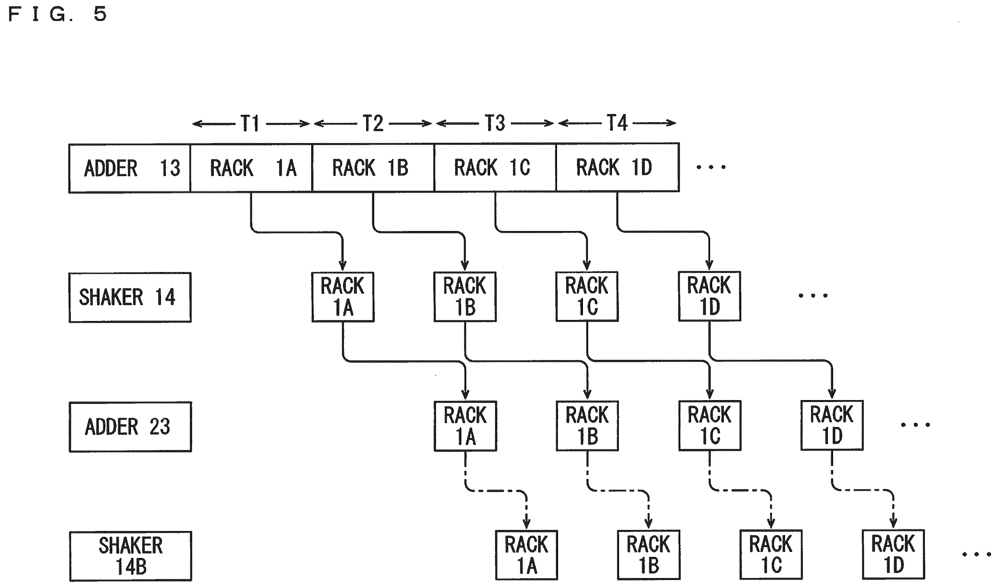

Fig. 5 is a diagram showing the time table of a third modified example. As shown in Fig. 5, in the third modified example, as compared with Fig. 2 or Fig. 3, during addition of an internal standard to a rack (the rack 1C, for example) by the adder 13, shaking of a rack (the rack 1B, for example), which is one rack before the rack (the rack 1C), by the shaker 14 and addition of powder to a rack (the rack 1A, for example), which is two racks before the rack (the rack 1C), by the adder 23 are carried out in parallel. Further, during addition of an internal standard to the rack (the rack 1C, for example) by the adder 13 and after addition of powder to the rack (the rack 1A, for example), which is two racks before the rack 1C, by the adder 23, shaking of the rack (the rack 1A, for example), which is two racks before the rack (the rack 1C), by the shaker 14B is carried out.

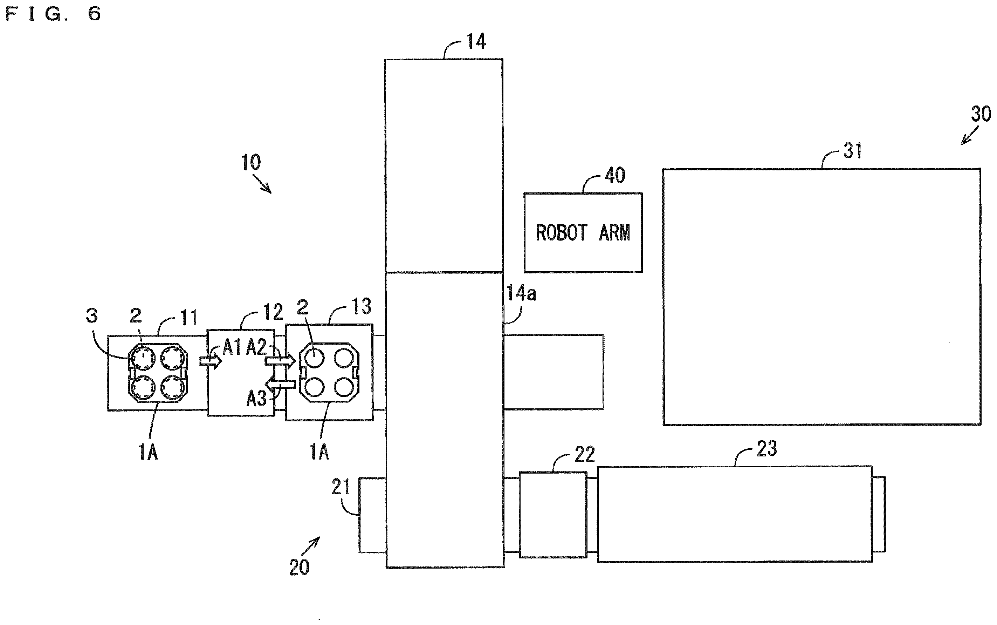

The time table of Fig. 2 will be described below, by way of example. Fig. 6 is a diagram for explaining the operations of the first adding unit 10 and the second adding unit 20 in the first period T1. As shown in Fig. 6, in the first period T1, the rack 1A is introduced into the transporter 11 of the first adding unit 10. Next, as indicated by the arrow A1, the transporter 11 transports the rack 1A to the attacher-detacher 12. The attacher-detacher 12 detaches a cap 3 from each sample bottle 2 in the rack 1A and holds the detached cap 3.

Subsequently, as indicated by the arrow A2, the transporter 11 transports the rack 1A to the adder 13. The adder 13 adds an internal standard to each sample bottle 2 in the rack 1A. Thereafter, as indicated by the arrow A3, the transporter 11 transports the rack 1A to the attacher-detacher 12. The attacher-detacher 12 attaches a held cap 3 to each sample bottle 2 in the rack 1A.

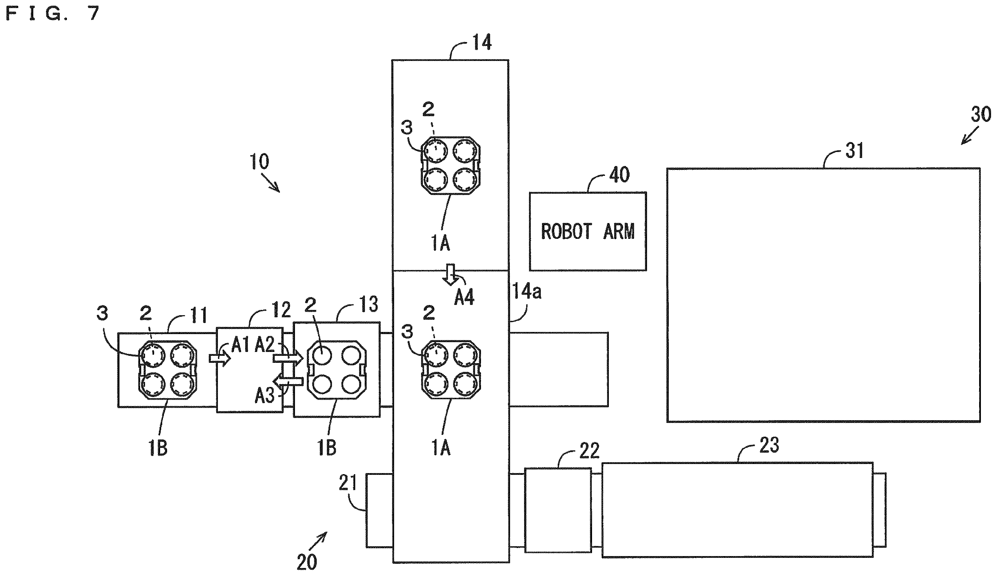

Fig. 7 is a diagram for explaining the operations of the first adding unit 10 and the second adding unit 20 in the second period T2. As shown in Fig. 7, in the second period T2, the rack 1B is introduced into the transporter 11 of the first adding unit 10. Further, the transporter 11 transports the rack 1A to the shaker 14. The shaker 14 shakes the rack 1A. After shaking is finished, as indicated by the arrow A4, the shaker 14 places the rack 1A in a predetermined placement portion (an arm portion 14a of the shaker 14). Meanwhile, the processing similar to the processing for the rack 1A in Fig. 6 is performed on the rack 1B.

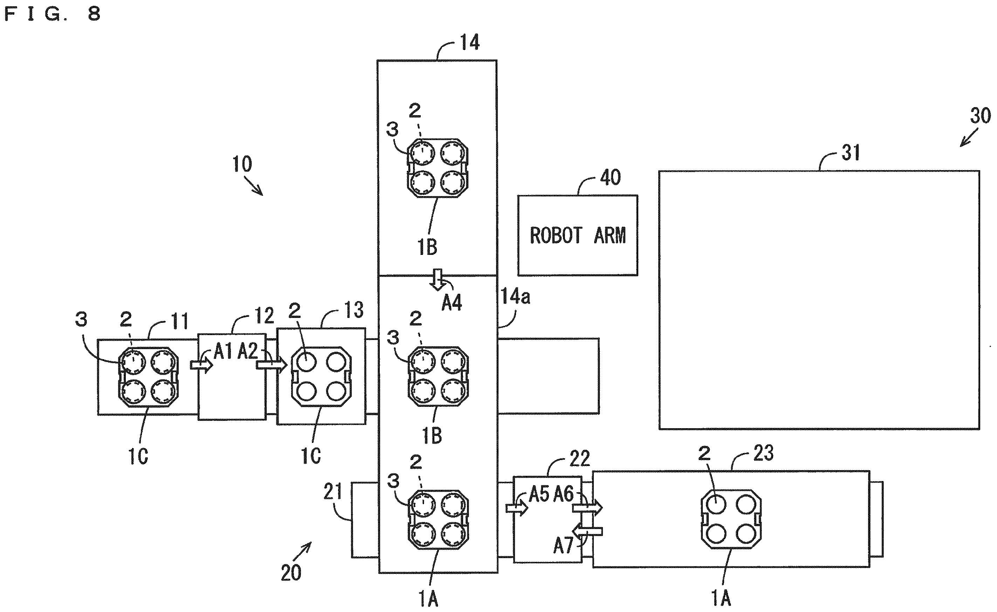

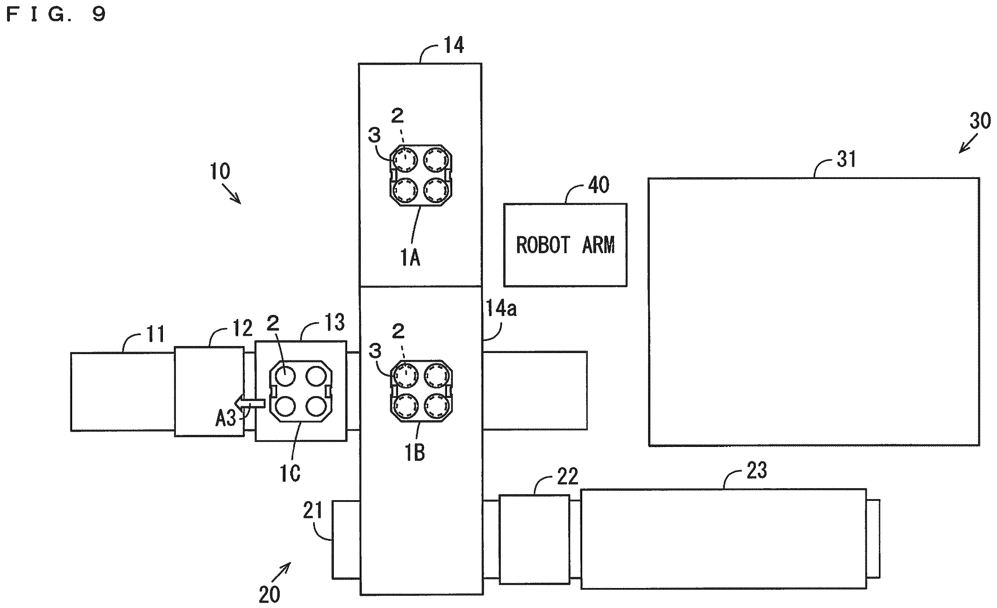

Figs. 8 and 9 are diagrams for explaining the operations of the first adding unit 10 and the second adding unit 20 in the third period T3. As shown in Fig. 8, in the third period T3, the rack 1C is introduced into the transporter 11 of the first adding unit 10. Further, the robot arm 40 transports the rack 1A to the transporter 21 of the second adding unit 20, and the transporter 11 transports the rack 1B to the shaker 14.

Next, as indicated by the arrow A5, the transporter 21 transports the rack 1A to the attacher-detacher 22. The attacher-detacher 22 detaches a cap 3 from each sample bottle 2 in the rack 1A and holds the detached cap 3. Next, as indicated by the arrow A6, the transporter 21 transports the rack 1A to the adder 23. The adder 23 adds powder to each sample bottle 2 in the rack 1A. Next, as indicated by the arrow A7, the transporter 21 transports the rack 1A to the attacher-detacher 22. The attacher-detacher 22 attaches a held cap 3 to each sample bottle 2 in the rack 1A.

Meanwhile, the processing similar to the processing for the rack 1A in Fig. 7 is performed on the rack 1B. Further, the processing similar to the processing for the rack 1B in Fig. 7 is performed on the rack 1C. Although the processing for the rack 1B performed by the shaker 14 is finished at a point in time at which the processing for the rack 1A performed by the adder 23 is finished, the processing for the rack 1C performed by the adder 13 is in progress.

As such, as shown in Fig. 9, the robot arm 40 transports the rack 1A to the shaker 14 of the first adding unit 10. The shaker 14 shakes the rack 1A. In the meantime, the processing for the rack 1C is performed in parallel by the adder 13. After the processing for the rack 1C performed by the adder 13 is finished, a cap 3 is attached to each sample bottle 2 in the rack 1C by the attacher-detacher 12.

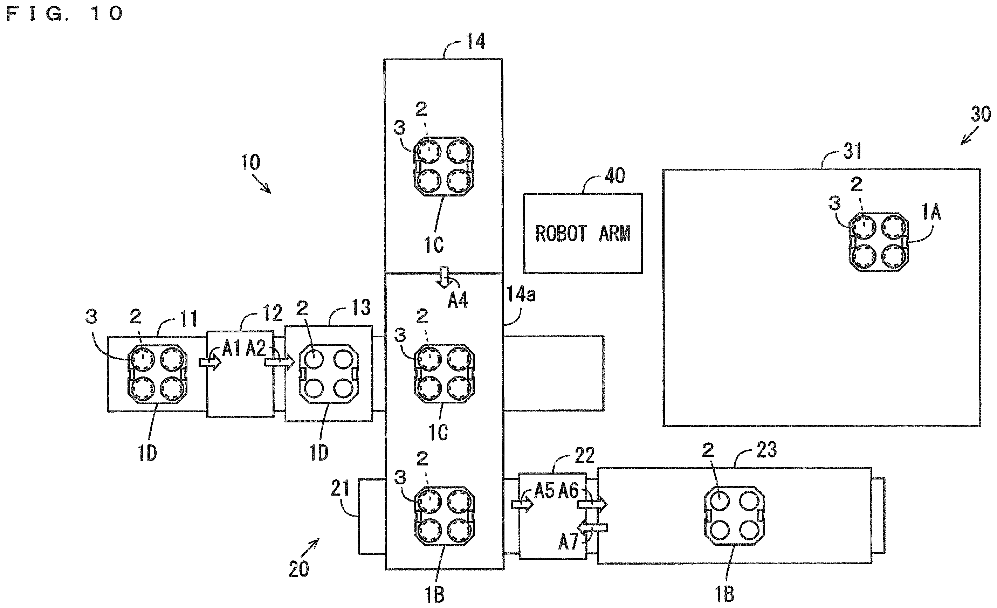

Fig. 10 is a diagram for explaining the operations of the first adding unit 10 and the second adding unit 20 in the fourth period T4. As shown in Fig. 10, in the fourth period T4, the rack 1D is introduced into the transporter 11 of the first adding unit 10. Further, the robot arm 40 transports the rack 1A to the separator 31 of the centrifugation unit 30 using one arm portion. Further, the robot arm 40 transports the rack 1B to the transporter 21 of the second adding unit 20 using the other arm portion, and the transporter 11 transports the rack 1C to the shaker 14.

The processing similar to the processing for the racks 1A to 1C in Figs. 8 and 9 is performed on the rack 1B to 1D. Thereafter, the similar processing is repeated for the following rack 1. Thus, a predetermined number (four in the present example) of racks 1 are introduced into the separator 31 of the centrifugation unit 30.

### (b) Centrifugation Unit and Transport Unit

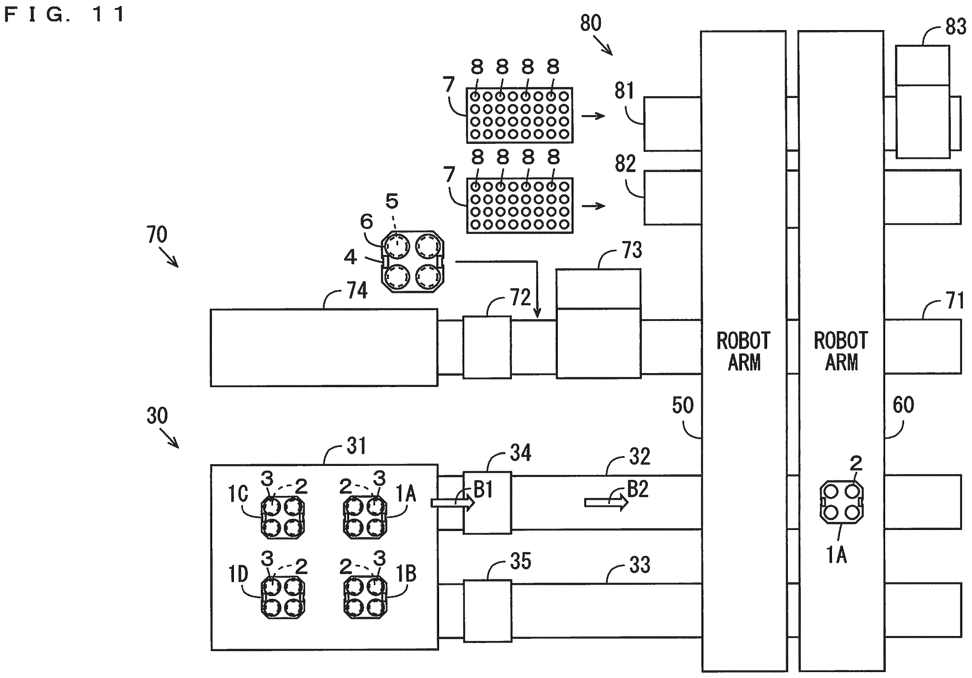

Figs. 11 to 13 are diagrams for explaining the operations of the centrifugation unit 30 and the transport unit 70. As shown in Fig. 11, a predetermined number of racks 1 are introduced into the separator 31 of the centrifugation unit 30. In this state, the separator 31 applies a centrifugal force to the plurality of introduced racks 1. Next, as indicated by the arrow B1, the transporter 32 transports the rack 1A to the attacher-detacher 34. The attacher-detacher 34 detaches a cap 3 from each sample bottle 2 in the rack 1A and holds the detached cap 3.

Subsequently, as indicated by the arrow B2, the transporter 32 transports the rack 1A to the robot arm 50 or the robot arm 60. Here, part of a sample in each sample bottle 2 held by the rack 1A is used as a sample for an LC, and the other part is used as a sample for a GC.

As such, when the sample for an LC is dispensed, the transporter 81 transports a rack 7 to the robot arm 60 in the transport unit 80. The robot arm 60 sucks the contents from a plurality of sample bottles 2 in the rack 1A in the transporter 32 and injects the contents into a plurality of vials 8 in the rack 7 in the transporter 81. After dispensing is finished, the transporter 81 transports the rack 7 to the compression filtration unit 83. Further, a new rack 7 is introduced into the transporter 81.

On the other hand, when a sample for a GC is dispensed, the transporter 71 transports a rack 4 to the robot arm 50 in the transport unit 70. The attacher-detacher 72 detaches a cap 6 from each dSPE tube 5 in the rack 4 and holds the detached cap 6. Further, in the transport unit 80, the transporter 82 transports a rack 7 to the robot arm 50. The robot arm 50 sucks the contents from the plurality of sample bottles 2 in the rack 1A in the transporter 32 and injects the contents into the plurality of dSPE tubes 5 in the rack 4 in the transporter 71. Thereafter, the attacher-detacher 72 attaches a held cap 6 to each dSPE tube 5 in the rack 4.

Next, the transporter 71 transports the rack 4 to the shaker 73. The shaker 73 shakes the rack 4. Thus, a shaking operation is performed on each dSPE tube 5 in the rack 4. After the shaking operation is finished, the transporter 71 transports the rack 4 to the separator 74. In a case in which a predetermined number (four in the present example) of racks 4 are introduced, the separator 74 applies a centrifugal force to the introduced racks 4. Thus, centrifugation is carried out. After the centrifugation is finished, the attacher-detacher 72 detaches a cap 6 from each dSPE tube 5 in the rack 4 and holds the detached cap 6. Further, the transporter 71 sequentially transports the racks 4 to the robot arm 50.

The robot arm 50 sucks the contents from the plurality of dSPE tubes 5 on which centrifugation has been carried out and injects the contents into the plurality of vials 8 in the rack 7 in the transporter 82. After dispensing is finished, the transporter 82 transports the rack 7 to an analysis device. Thereafter, the attacher-detacher 72 attaches a held cap 6 to each dSPE tube 5 in the rack 4 for which dispensing has been finished. The transporter 71 transports the used rack 4 to a discarding device (not shown). Further, a new rack 4 is introduced into the transporter 71, and a new rack 7 is introduced into the transporter 82.

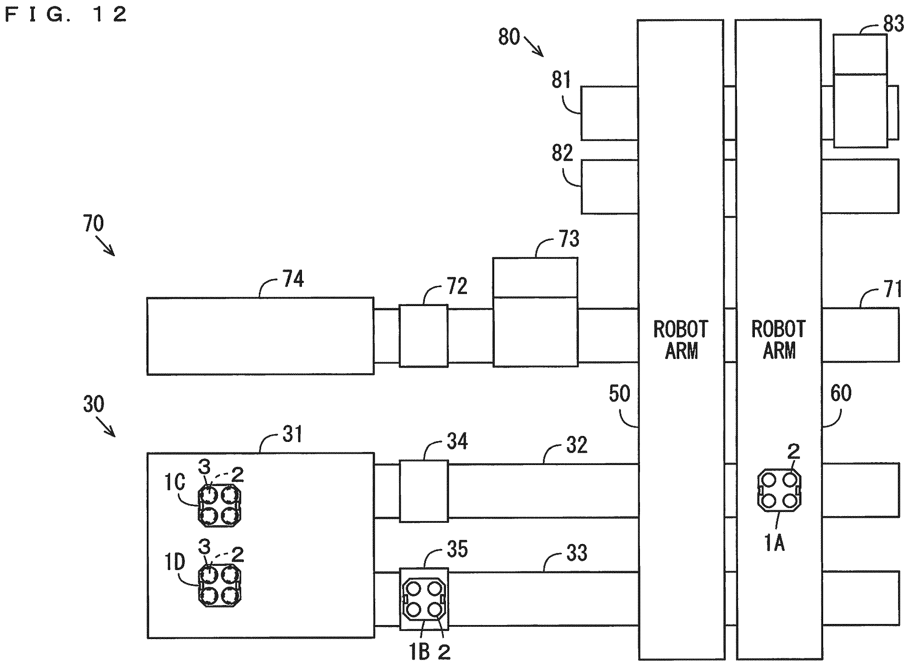

As shown in Fig. 12, during a period in which the above-mentioned dispensing is carried out, the transporter 33 transports the rack 1B to the attacher-detacher 35. The attacher-detacher 35 detaches a cap 3 from each sample bottle 2 in the rack 1B and holds the detached cap 3. Thus, after the processing for the rack 1A is finished, the processing for the rack 1B can be started immediately.

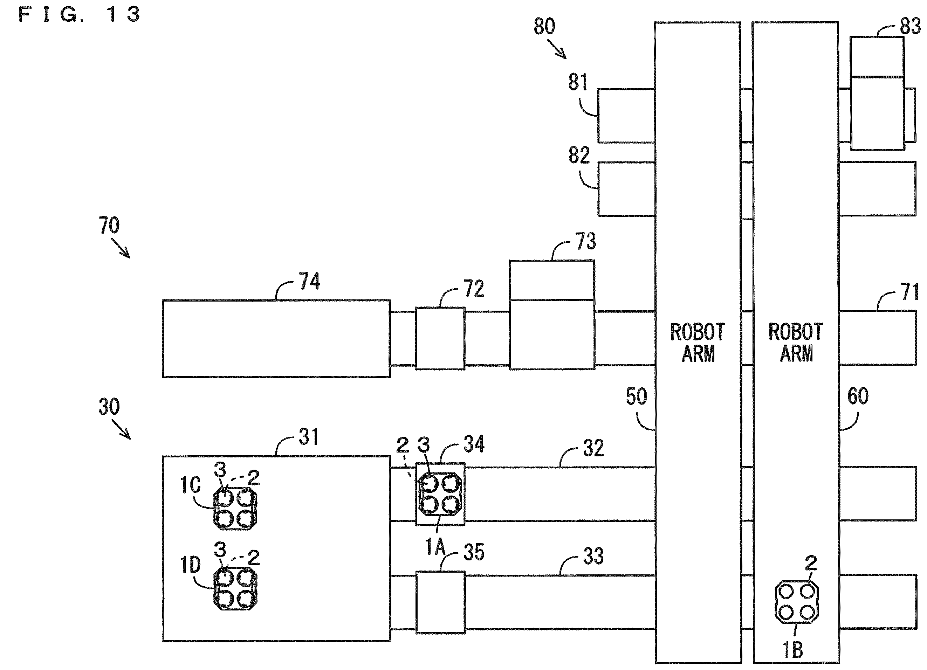

As shown in Fig. 13, after the processing for the rack 1A is finished, the transporter 32 transports the rack 1A to the attacher-detacher 34, and the transporter 33 transports the rack 1B to the robot arm 50 or the robot arm 60. The attacher-detacher 34 attaches a held cap 3 to each sample bottle 2 in the rack 1A. Thereafter, the transporter 32 transports the rack 1A to the discarding device (not shown).

Meanwhile, the processing similar to the processing for the rack 1A in Figs. 11 and 12 is performed on the rack 1B. Further, during a period in which the processing for the rack 1B is performed, the transporter 32 transports the rack 1C to the attacher-detacher 34. The attacher-detacher 34 detaches a cap 3 from each sample bottle 2 in the rack 1C and holds the detached cap 3. Thus, after the processing for the rack 1B is finished, the processing for the rack 1C can be started immediately. Thereafter, the similar processing is repeated for the following rack 1.

### (3) Flowchart of Pre-processing

### (a) Overall Process of Pre-processing

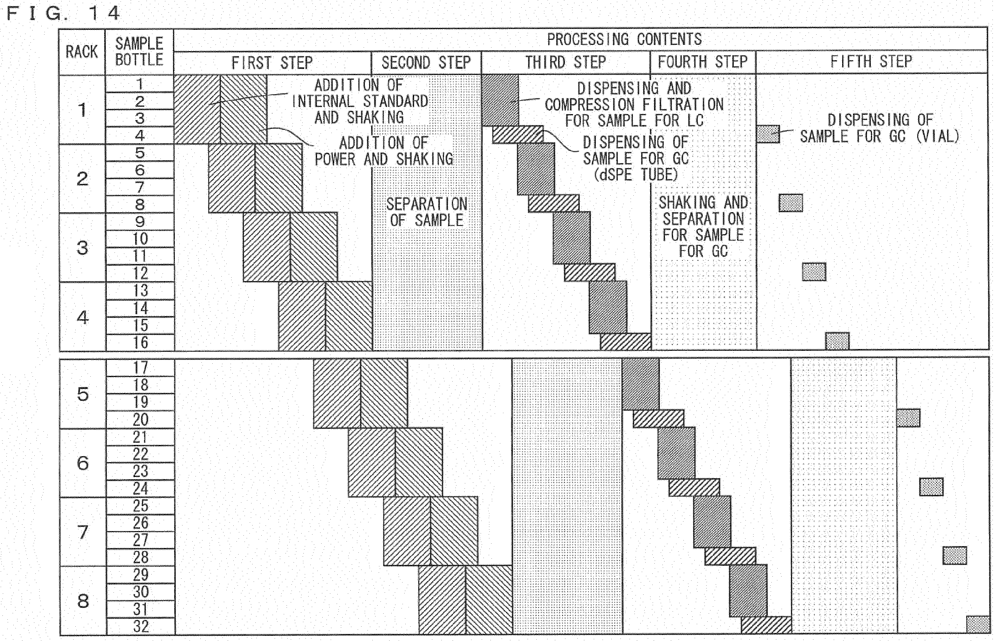

Fig. 14 is a diagram showing the entire process of the pre-processing performed by the pre-processing device 100. In Fig. 14, a unique hatching pattern or dot pattern is applied to a rectangle indicating each process. As shown in Fig. 14, the pre-processing includes first to fifth processes.

In the first process, after addition of an internal standard and shaking are carried out, addition of powder and shaking are carried out. In the second process, a sample is separated. In the third process, a sample for an LC is dispensed into a vial 8, and compression filtration for the sample for an LC is carried out, and a sample for a GC is dispensed into a dSPE tube 5. In the fourth process, the sample for a GC in the dSPE tube 5 is shaken and separated. In the fifth process, the sample for a GC is dispensed into a vial 8. Each process will be described below with reference to a flowchart.

### (b) First Process

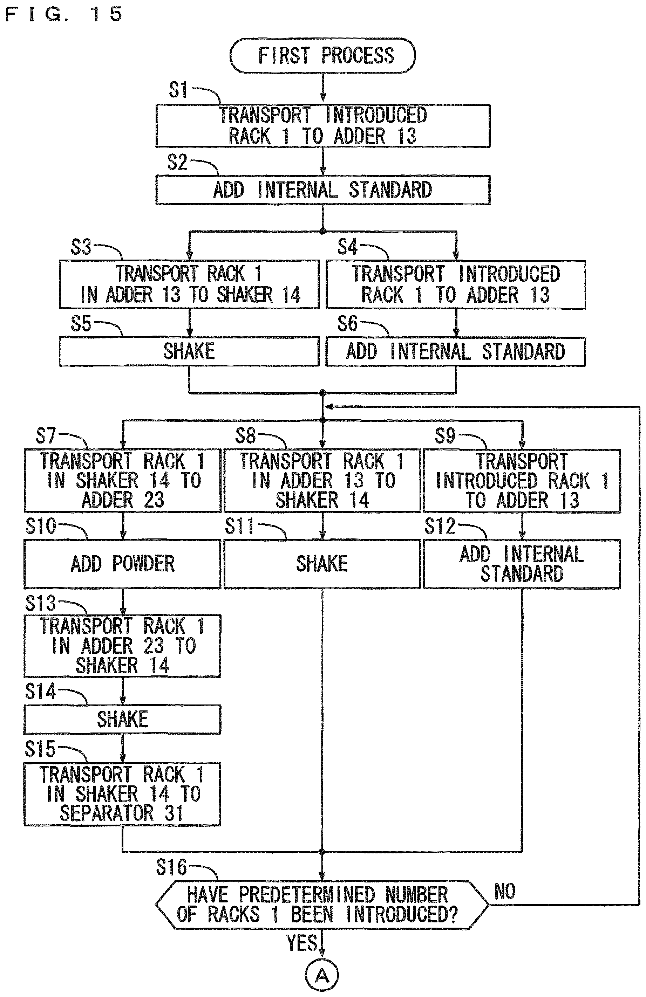

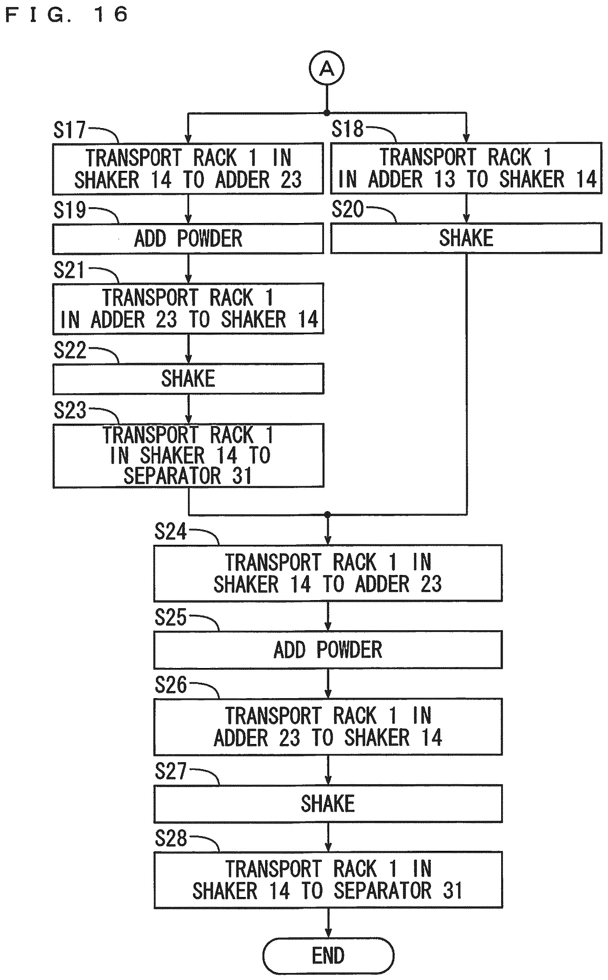

Figs. 15 and 16 are flowcharts showing the first process. In the flowcharts of Figs. 15 and 16, the process for attachment of a cap 3 to or detachment of a cap 3 from a sample bottle 2 is not be described. The plurality of racks 1 are sequentially introduced into the transporter 11 of the first adding unit 10 by a transport device (not shown). The transporter 11 transports a newly introduced rack 1 to the adder 13 (step S1). The adder 13 adds an internal standard to each sample bottle 2 in the rack 1 transported in the step S1 (step S2).

Next, the transporter 11 transports the rack 1 in the adder 13 to the shaker 14 (step S3). Further, the transporter 11 transports a newly introduced rack 1 to the adder 13 similarly to the step S1 (step S4). The shaker 14 shakes the rack 1 transported in the step S3 (step S5). The adder 13 adds an internal standard to each sample bottle 2 in the rack 1 transported in the step S4 similarly to the step S2 (step S6). The steps S3 and S5 are executed in parallel with the steps S4 and S6.

Next, the robot arm 40 transports the rack 1 in the shaker 14 to the adder 23 of the second adding unit 20 (step S7). Similarly to the step S3, the transporter 11 transports the rack 1 in the adder 13 to the shaker 14 (step S8). Further, the transporter 11 transports a newly introduced rack 1 to the adder 13 similarly to the step S4 (step S9).

The adder 23 adds powder to each sample bottle 2 in the rack 1 transported in the step S7 (step S10). Similarly to the step S5, the shaker 14 shakes the rack 1 transported in the step S8 (step S11). Similarly to the step S6, the adder 13 adds an internal standard to each sample bottle 2 in the rack 1 transported in the step S9 (step S12).

Subsequently, the robot arm 40 transports the rack 1 in the adder 23 to the shaker 14 of the first adding unit 10 (step S13). The shaker 14 shakes the rack 1 transported in the step S13 (step S14). Thereafter, the robot arm 40 transports the rack 1 in the shaker 14 to the separator 31 of the centrifugation unit 30 (step S15). The steps S7, S10, S13, S14 and S15, the steps S8 and S11, and the steps S9 and S12 are executed in parallel.

Next, the controller 90 determines whether a predetermined number (120 in the present example) of racks 1 have been introduced into the transporter 11 of the first adding unit 10 (step S16). In a case in which the predetermined number of racks 1 have not been introduced, the processing returns to the processing between the steps S5 and S6, and the steps S7 to S9. The steps S7 to S16 are repeated until the predetermined number of racks 1 are introduced.

In a case in which the predetermined number of racks 1 are introduced, the robot arm 40 transports the rack 1 in the shaker 14 to the adder 23 of the second adding unit 20 similarly to the step S7 (step S17). Similarly to the step S8, the transporter 11 transports the rack 1 in the adder 13 to the shaker 14 (step S18). Next, similarly to the step S10, the adder 23 adds powder to each sample bottle 2 in the rack 1 transported in the step S17 (step S19). Similarly to the step S11, the shaker 14 shakes the rack 1 transported in the step S18 (step S20).

Subsequently, similarly to the step S13, the robot arm 40 transports the rack 1 in the adder 23 to the shaker 14 of the first adding unit 10 (step S21). Similarly to the step S14, the shaker 14 shakes the rack 1 transported in the step S21 (step S22). Thereafter, similarly to the step S15, the robot arm 40 transports the rack 1 in the shaker 14 to the separator 31 of the centrifugation unit 30 (step S23). The steps S17, S19, S21, S22 and S23 are executed in parallel with and the steps S18 and S20.

Next, similarly to the step S17, the robot arm 40 transports the rack 1 in the shaker 14 to the adder 23 of the second adding unit 20 (step S24). Similarly to the step S19, the adder 23 adds powder to each sample bottle 2 in the rack 1 transported in the step S24 (step S25).

Subsequently, similarly to the step S21, the robot arm 40 transports the rack 1 in the adder 23 to the shaker 14 of the first adding unit 10 (step S26). Similarly to the step S22, the shaker 14 shakes the rack 1 transported in the step S26 (step S27). Thereafter, similarly to the step S23, the robot arm 40 transports the rack 1 in the shaker 14 to the separator 31 of the centrifugation unit 30 (step S28). Thus, the first process is finished.

### (c) Second Process

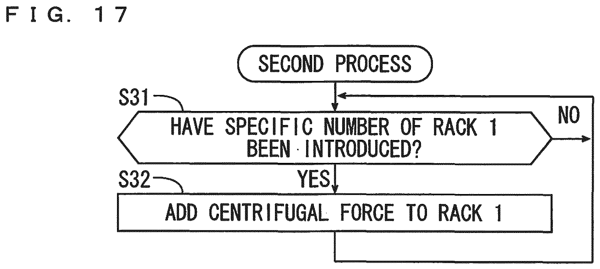

Fig. 17 is a flowchart showing a second process. The plurality of racks 1 are sequentially introduced into the separator 31 of the centrifugation unit 30 when the steps S15, S23 and S28 of the first process are executed. The controller 90 determines whether a specific number (four in the present example) of racks 1 have been introduced into the separator 31 (step S31). In a case in which the specific number of racks 1 have not been introduced, the controller 90 waits until the specific number of racks 1 are introduced.

In a case in which the specific number of racks 1 are introduced, the separator 31 applies a centrifugal force to the introduced rack 1 (step S32). Thereafter, the processing returns to the step S31.

### (d) Third Process

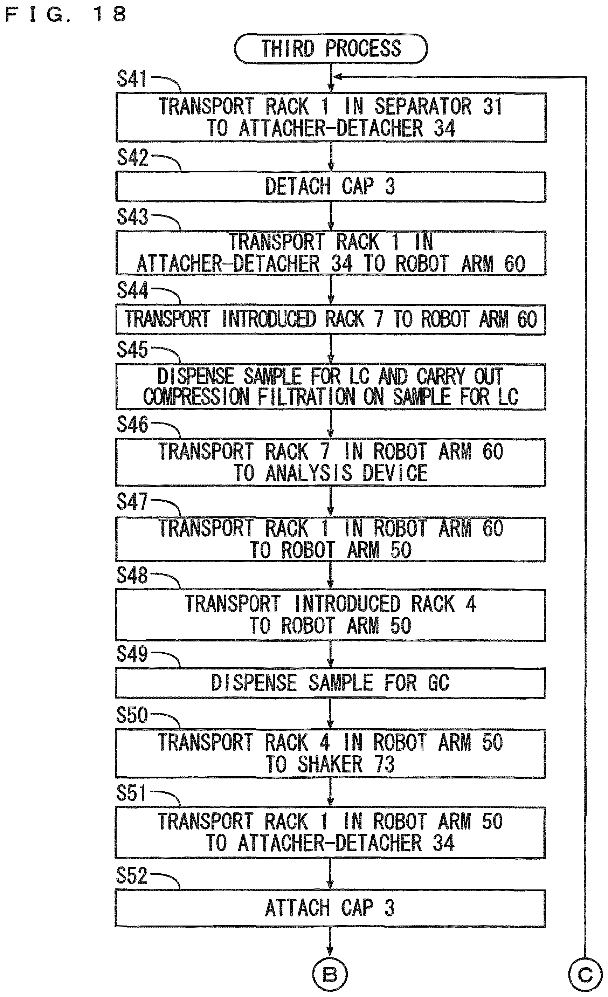

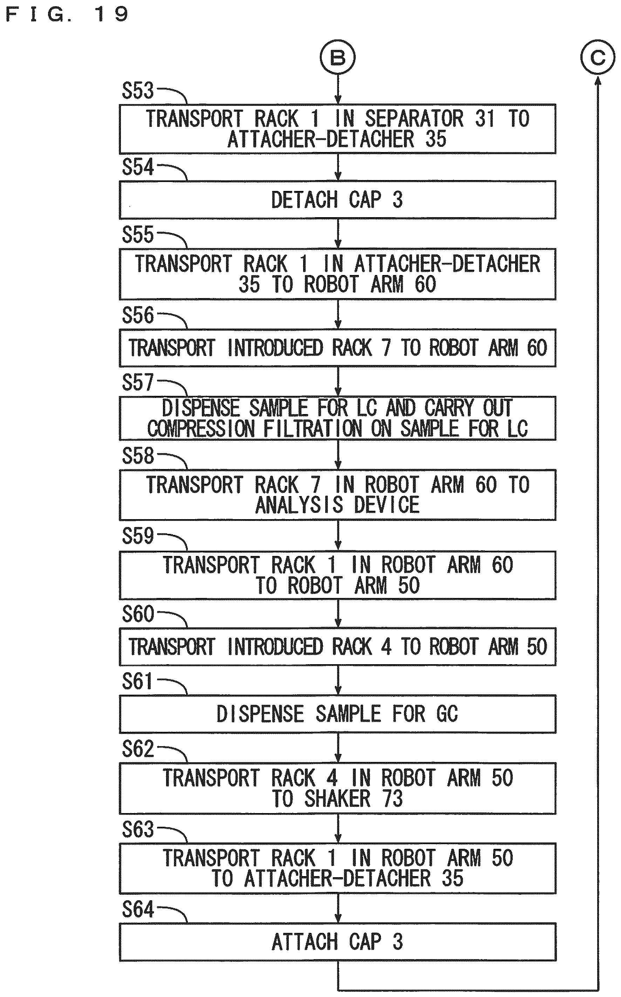

Figs. 18 and 19 are flowcharts showing a third process. The plurality of racks 4 are sequentially introduced into the transporter 71 of the transport unit 70 by the transport device (not shown). Further, the plurality of racks 7 are sequentially introduced into each of the transporters 81, 82 by the transport device (not shown). The transporter 32 of the centrifugation unit 30 transports the rack 1 in the separator 31 to the attacher-detacher 34 (step S41). The attacher-detacher 34 detaches a cap 3 from each sample bottle 2 in the rack 1 transported in the step S41 (step S42).

The transporter 32 transports the rack 1 in the attacher-detacher 34 to the robot arm 60 (step S43). Further, the transporter 81 of the transport unit 80 transports a newly introduced rack 7 to the robot arm 60 (step S44). The step S44 may be executed in parallel with the step S43.

The robot arm 60 sucks a sample for an LC from a sample bottle 2 in the rack 1 transported in the step S43 and injects the sample for an LC into a vial 8 in the rack 7 transported in the step S44. Further, the transporter 81 transports the rack 7 to the compression filtration unit 83. Thus, the sample for an LC is dispensed, and compression filtration for the sample for an LC is carried out (step S45). Next, the transporter 81 transports the rack 7 in the robot arm 60 to the analysis device (step S46).

Subsequently, the transporter 32 transports the rack 1 in the robot arm 60 to the robot arm 50 (step S47). Further, the transporter 71 transports a newly introduced rack 4 to the robot arm 50 (step S48). At this time, a cap 6 of each dSPE tube 5 in the rack 4 is detached and held by the attacher-detacher 72. The step S48 may be executed in parallel with the step S47.

The robot arm 50 sucks a sample for a GC from a sample bottle 2 in the rack 1 transported in the step S47 and injects the sample for a GC into a dSPE tube 5 in the rack 4 transported in the step S48, thereby dispensing the sample for a GC (step S49). Thereafter, the transporter 71 transports the rack 4 in the robot arm 50 to the shaker 73 (step S50). At this time, a cap 6 is attached to each dSPE tube 5 in the rack 4 by the attacher-detacher 72.

Further, the transporter 32 transports the rack 1 in the robot arm 50 to the attacher-detacher 34 (step S51). The attacher-detacher 34 attaches a cap 3 detached in the step S42 to each sample bottle 2 in the rack 1 transported in the step S51 (step S52). The steps S51 and S52 may be executed in parallel with the step S50. The rack 1 in which a cap 3 is attached to each sample bottle 2 in the step S52 is transported to the discarding device (not shown).

Further, the transporter 33 transports the rack 1 in the separator 31 to the attacher-detacher 35 (step S53). The attacher-detacher 35 detaches a cap 3 from each sample bottle 2 in the rack 1 transported in the step S53 (step S54). The steps S53 and S54 are executed in parallel with the steps S43 to S50.

Next, the transporter 33 transports the rack 1 in the attacher-detacher 35 to the robot arm 60 (step S55). Further, the transporter 81 transports a newly introduced rack 7 to the robot arm 60 (step S56). The step S56 may be executed in parallel with the step S55.

The robot arm 60 sucks a sample for an LC from a sample bottle 2 in the rack 1 transported in the step S55 and injects the sample for an LC into a vial 8 in the rack 7 transported in the step S56. Further, the transporter 81 transports the rack 7 to the compression filtration unit 83. Thus, the sample for an LC is dispensed, and compression filtration for the sample for LC is carried out (step S57). Next, the transporter 81 transports the rack 7 in the robot arm 60 to the analysis device (step S58).

Subsequently, the transporter 33 transports the rack 1 in the robot arm 60 to the robot arm 50 (step S59). Further, the transporter 71 transports a newly introduced rack 4 to the robot arm 50 (step S60). At this time, a cap 6 of each dSPE tube 5 in the rack 4 is detached and held by the attacher-detacher 72. The step S60 may be executed in parallel with the step S59.

The robot arm 50 sucks a sample for a GC from a sample bottle 2 in the rack 1 transported in the step S59 and injects the sample for a GC into a dSPE tube 5 in the rack 4 transported in the step S60, thereby dispensing the sample for a GC (step S61). Thereafter, the transporter 71 transports the rack 4 in the robot arm 50 to the shaker 73 (step S62). At this time, a cap 6 is attached to each dSPE tube 5 in the rack 4 by the attacher-detacher 72.

Further, the transporter 33 transports the rack 1 in the robot arm 50 to the attacher-detacher 35 (step S63). The attacher-detacher 35 attaches a cap 3 detached in the step S54 to each sample bottle 2 in the rack 1 transported in the step S63 (step S64). The steps S63 and S64 may be executed in parallel with the step S62. The rack 1 in which a cap 3 is attached to each sample bottle 2 in the step S64 is transported to the discarding device (not shown).

Thereafter, the processing returns to the step S41. In this case, the next steps S41 and S42 are executed in parallel with the previous steps S55 to S62.

### (e) Fourth Process

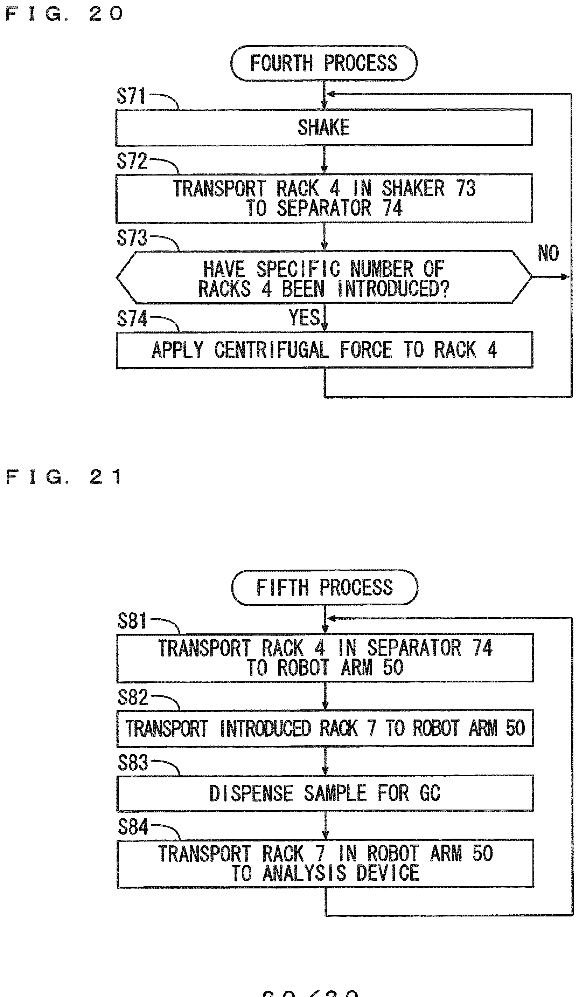

Fig. 20 is a flowchart showing a fourth process. The plurality of racks 4 are sequentially introduced into the shaker 73 of the transport unit 70 when the steps S50 and S62 of the third process are executed. The shaker 73 shakes an introduced rack 4 (step S71). Next, the transporter 71 transports the rack 4 in the shaker 73 to the separator 74 (step S72). Thus, the rack 4 is introduced into the separator 74.

Subsequently, the controller 90 determines whether a specific number (four in the present example) of racks 4 have been introduced into the separator 74 (step S73). In a case in which the specific number of racks 4 are not introduced, the processing returns to the step S71. The steps S71 to S73 are repeated until the predetermined number of racks 4 are introduced. In a case in which the specific number of racks 4 are introduced, the separator 74 applies a centrifugal force to the introduced racks 4 (step S74). Thereafter, the processing returns to the step S71.

In the fourth process, centrifugation for a sample is carried out with use of the separator 74 different from the separator 31 of the centrifugation unit 30. Therefore, in each of the centrifugation unit 30 and the transport unit 70, a waiting period of time for carrying out centrifugation on a sample is shortened. Thus, the throughput can be improved.

### (f) Fifth Process

Fig. 21 is a flowchart showing a fifth process. The transporter 71 of the transport unit 70 transports a rack 4 in the separator 74 to the robot arm 50 (step S81). At this time, a cap 6 of each dSPE tube 5 in the rack 4 is detached and held by the attacher-detacher 72. Further, the transporter 82 transports a newly introduced rack 7 to the robot arm 50 (step S82). The step S82 may be executed in parallel with the step S81.

The robot arm 50 sucks a sample for a GC from a dSPE tube 5 in the rack 4 transported in the step S81 and injects the sample for a GC into a vial 8 in the rack 7 transported in the step S82, thereby dispensing the sample for a GC (step S83). Next, the transporter 82 transports the rack 7 in the robot arm 50 to the analysis device (step S84). Thereafter, the processing returns to the step S81. After the step S83 is finished, a cap 6 is attached to each dSPE tube 5 in the rack 4 by the attacher-detacher 72, and the rack 4 is discarded.

### (4) Effects

In the pre-processing device 100 according to the present embodiment, internal standards are sequentially added by the adder 13 to samples contained in the sample bottles 2 in the plurality of racks 1. The first-time shaking is sequentially carried out by the shaker 14 with respect to the plurality of samples to which the internal standards have been added. Powder is sequentially added by the adder 23 to the plurality of samples on which the first-time shaking has been carried out. The second-time shaking is sequentially carried out by the shaker 14 with respect to the plurality of samples to which power has been added.

In parallel with addition of an internal standard to a sample in the rack 1C, the first-time shaking for a sample in the rack 1B and addition of powder to a sample in the rack 1A are carried out. After the first-time shaking for the sample in the rack 1B and the addition of powder to the sample in the rack 1A are finished, the second-time shaking for the sample in the rack 1A is further carried out in parallel with addition of an internal standard to the sample in the rack 1C. The similar processing is also repeated with respect to samples in the subsequent rack 1.

In this case, it is possible to perform a plurality of pre-processing in parallel without interference between the pre-processing for a sample in each rack 1 and the pre-processing for a sample in another rack 1. Thus, the period of time required for pre-processing for a plurality of samples is shortened. As a result, it is possible to perform pre-processing on a large number of samples while improving a throughput.

### (5) Other Embodiments

(a) While a rack 1 holds four sample bottles 2 in the above-mentioned embodiment, the embodiment is not limited to this. A rack 1 may hold three or less sample bottles 2, or may hold five or more sample bottles 2.
(b) While the transport unit 70 includes the shaker 73 and the separator 74 in the above-mentioned embodiment, the embodiment is not limited to this. In a case in which the pre-processing for a sample for a GC is not performed, the transport unit 70 does not have to include the shaker 73 or the separator 74. Alternatively, in a case in which the pre-processing device 100 has a sufficient throughput, a sample for a GC may be separated by the separator 31 of the centrifugation unit 30. In this case, the transport unit 70 does not have to include the separator 74.
(c) While the centrifugation unit 30 includes the two transporters 32, 33 that are provided in parallel to each other in the above-mentioned embodiment, the embodiment is not limited to this. In a case in which the pre-processing device 100 has a sufficient throughput, the centrifugation unit 30 may include one transporter.
(d) While the pre-processing device 100 includes the robot arm 40 in the above-mentioned embodiment, the embodiment is not limited to this. Instead of the robot arm 40, the pre-processing device 100 may include a belt conveyor that transports a rack 1 in the similar manner to the robot arm 40.
(e) While the pre-processing device 100 transports a rack 7 to the analysis device by the transporters 81, 82 of the transport unit 80 after dispensing is finished in the above-mentioned embodiment, the embodiment is not limited to this. The pre-processing device 100 does not have to transport the rack 7 to the analysis device after dispensing is finished.

In the pre-processing device defined in claim 1, the first-time shaking for the second sample is carried out in parallel with the addition of the first additive to the third sample. In this case, it is possible to perform a plurality of pre-processing in parallel without interference between the pre-processing for each sample and the pre-processing for another sample. This shortens the period of time required for pre-processing for a plurality of samples. As a result, it is possible to perform pre-processing on a large number of samples while improving the throughput.

As a comparative example, for example, it is considered that addition of the first additive and the subsequent first-time shaking are carried out in this order for the second sample, and then addition of the first additive and the subsequent first-time shaking are carried out for the next third sample. In this comparative example, the processing period of time is longer than that in the present embodiment by the period of time required for the first-time shaking by the shaker. On the other hand, in the present embodiment, because the first-time shaking for the second sample, which is one sample before the third sample, is carried out in parallel with the addition of the first additive to the third sample, it is possible to shorten the processing period of time by the period of time required for the first-time shaking by the shaker. This can be applied to all of Figs. 2 to 5.

The configuration defined in claim 2 can be applied to Fig. 3 and Fig. 4 in particular.

In the configuration defined in claim 1, because the second-time shaking for the first sample is further carried out in parallel with the addition of the first additive to the third sample, the period of time required for the pre-processing for the plurality of samples is further shortened. Thus, the throughput can be more sufficiently improved.

Further, because both of the first-time shaking and the second-time shaking can be alternately carried out by one shaker, it is not necessary to separately provide shakers for carrying out the first-time shaking and a shaker for performing the second-time shaking. Thus, it is possible to obtain additional effects such as a reduction in number of components, a reduction in cost and a reduction in size of the entire device. This can be applied to Fig. 2 and Fig. 3 in particular.

In the configuration defined in claim 3, the second-time shaking for the first sample can be carried out immediately after the addition of the second additive to the first sample. As a result, even in a case in which the second additive is powder, it is possible to prevent a problem that powder is solidified due to not being immediately shaken. This can be applied to Fig. 2 in particular.

The configuration defined in claim 4 can be applied to Fig. 4 and Fig. 5 in particular.

In the configuration defined in claim 5, the pre-processed sample can be dispensed.

In the configuration defined in claim 6, the first sample can be easily transported to the second adder without interfering with another sample. Thus, addition of the second additive to the first sample can be easily carried out in parallel with addition of the first additive to the third sample.

In the configuration defined in claim 7, the first sample can be easily transported to the shaker without interfering with another sample. Thus, the second-time shaking for the first sample can be easily carried out in parallel with addition of the first additive to the third sample.

In the configuration defined in claim 8, the first sample can be easily transported to the first separator without interfering with another sample. Thus, the pre-processing similar to that for the first to third samples can be easily repeated for subsequent samples.

In the configuration defined in claim 9, dispensing of the second sample can be started immediately after dispensing of the first sample is finished. Thus, the throughput can be more sufficiently improved.

In the configuration defined in claim 10, dispensing of the third sample can be started immediately after dispensing of the second sample is finished. Thus, the throughput can be more sufficiently improved.

In the configuration defined in claim 11, because centrifugation for each sample after dispensing is carried out with use of the second separator different from the first separator, this shortens the waiting period of time required for carrying out centrifugation on each sample. Thus, the throughput can be more sufficiently improved.

In the configuration defined in claim 12, a large amount of sample is efficiently pre-processed. Thus, the throughput can be more sufficiently improved.

## Claims

1. A pre-processing device (100) that performs pre-processing on a plurality of samples that are sequentially introduced, comprising:
a first adder (13) that adds a first additive to each sample;
a second adder (23) that adds a second additive to each sample;
a shaker that shakes each sample; and
a controller (90) that controls operations of the first adder (13), the second adder (23) and the shaker such that addition of the first additive, first-time shaking, addition of the second additive and second-time shaking are carried out sequentially with respect to a same sample, wherein
the plurality of samples include a first sample, a second sample and a third sample that are introduced in this order,
the controller (90) controls operations of the first adder (13), the second adder (23) and the shaker such that the first-time shaking for the second sample is carried out in parallel with addition of the first additive to the third sample,
the shaker is only one shaker that carries out the first-time shaking and the second-time shaking with respect to each sample, and
the controller (90) controls operations of the first adder (13), the second adder (23) and the shaker such that the second-time shaking for the first sample is further carried out in parallel with addition of the first additive to the third sample after the first-time shaking for the second sample and addition of the second additive to the first sample are finished.

2. The pre-processing device (100) according to claim 1, wherein
the controller (90) controls operations of the first adder (13), the second adder (23) and the shaker such that addition of the second additive to the first sample is carried out in parallel with addition of the first additive to the second sample.

3. The pre-processing device (100) according to claim 1, wherein
the controller (90) controls operations of the first adder (13), the second adder (23) and the shaker such that the first-time shaking for the second sample and addition of the second additive to the first sample are carried out in parallel with addition of the first additive to the third sample.

4. The pre-processing device (100) according to claim 1, wherein
addition of the first additive is addition of an internal standard, and a period of time required for addition of the first additive is longer than a period of time required for the first-time shaking.

5. The pre-processing device (100) according to claim 1, further comprising:
a first separator (31) that carries out centrifugation on each sample on which the second-time shaking has been carried out; and
a dispenser (50, 60) that dispenses each sample on which centrifugation has been carried out by the first separator (31).

6. The pre-processing device (100) according to claim 5, further comprising a robot arm (40, 50, 60) or a belt conveyor that holds and transports each sample, wherein
the controller (90) controls an operation of the robot arm (40, 50, 60) or the conveyor such that the first sample is transported from the shaker to the second adder (23) during a period in which the first additive is added to the third sample by the first adder (13).

7. The pre-processing device (100) according to claim 6, wherein
the controller (90) controls an operation of the robot arm (40, 50, 60) or the belt conveyor such that the second sample the first-time shaking for which is finished is placed on a placement portion provided in the shaker and the first sample is transported from the second adder (23) to the shaker, during addition of the first additive to the third sample by the first adder (13).

8. The pre-processing device (100) according to claim 6, wherein
the controller (90) controls an operation of the robot arm (40, 50, 60) or the belt conveyor such that the first sample the second-time shaking for which is finished is transported from the shaker to the first separator (31).

9. The pre-processing device (100) according to claim 5, wherein
the plurality of samples are respectively contained in a plurality of sample bottles (2) to which caps are respectively attachable,
the pre-processing device (100) further includes
a first transporter that transports any one of the plurality of sample bottles (2) from the first separator (31) to the dispenser (50, 60),
a second transporter that transports another one of the plurality of sample bottles (2) from the first separator (31) to the dispenser (50, 60),
a first attacher-detacher that attaches the cap (3) to or detaches the cap (3) from a sample bottle (2) transported by the first transporter, and
a second attacher-detacher that attaches the cap (3) to or detaches the cap (3) from a sample bottle (2) transported by the second transporter,
the plurality of sample bottles (2) include a first sample bottle and a second sample bottle that respectively contain the first sample and the second sample, and
the controller (90)
controls operations of the first transporter, the first attacher-detacher and the dispenser (50, 60) such that detachment of the cap (3), dispensing of the first sample and attachment of the cap (3) are sequentially carried out with respect to the first sample bottle, and
controls operations of the second transporter and the second attacher-detacher such that the cap (3) is detached from the second sample bottle in parallel with dispensing of the first sample by the dispenser (50, 60).

10. The pre-processing device (100) according to claim 9, wherein
the plurality of sample bottles (2) further include a third sample bottle that contains the third sample, and
the controller (90)
controls operations of the second transporter, the second attacher-detacher and the dispenser (50, 60) such that dispensing of the second sample and attachment of the cap (3) are sequentially carried out with respect to the second sample bottle, and
controls operations of the first transporter and the first attacher-detacher such that the cap (3) is detached from the third sample bottle in parallel with dispensing of the second sample by the dispenser (50, 60).

11. The pre-processing device (100) according to claim 5, further comprising a second separator (74) that carries out centrifugation on each sample on which dispensing has been carried out by the dispenser (50, 60).

12. The pre-processing device (100) according to claim 1, wherein
the pre-processing device (100) performs pre-processing on the plurality of samples with use of a QuEChERS method.

13. A pre-processing method of performing pre-processing on a plurality of samples that are sequentially introduced, including the steps of:
sequentially adding a first additive to the plurality of samples by using a first adder (13);
sequentially carrying out first-time shaking by using a shaker with respect to the plurality of samples to which the first additive has been added;
sequentially adding a second additive by using a second adder (23) to the plurality of samples on which the first-time shaking has been carried out; and
sequentially carrying out second-time shaking by using the shaker with respect to the plurality of samples to which the second additive have been added, wherein
the plurality of samples include a first sample, a second sample and a third sample that that are introduced in this order,
the first-time shaking for the second sample is carried out in parallel with addition of the first additive to the third sample,
the shaker is only one shaker that carries out the first-time shaking and the second-time shaking with respect to each sample, and
the second-time shaking for the first sample is further carried out in parallel with addition of the first additive to the third sample after the first-time shaking for the second sample and addition of the second additive to the first sample are finished.

14. The pre-processing method according to claim 13, wherein
the first-time shaking for the second sample and addition of the second additive to the first sample are carried out in parallel with addition of the first additive to the third sample.

## Patentansprüche

1. Vorverarbeitungsvorrichtung (100), die eine Vorverarbeitung an einer Vielzahl von nacheinander eingeführten Proben durchführt, umfassend:
einen ersten Zusetzer (13), der jeder Probe einen ersten Zusatzstoff zusetzt;
einen zweiten Zusetzer (23), der jeder Probe einen zweiten Zusatzstoff zusetzt;
eine Schüttelvorrichtung, die jede Probe schüttelt; und
eine Steuerung (90), die Vorgänge des ersten Zusetzers (13), des zweiten Zusetzers (23) und des Schüttlers derart steuert, dass der Zusatz des ersten Zusatzstoffes, ein erstmaliges Schütteln, der Zusatz des zweiten Zusatzstoffes und ein zweitmaliges Schütteln nacheinander in Bezug auf eine gleiche Probe ausgeführt werden, wobei
die Vielzahl von Proben eine erste Probe, eine zweite Probe und eine dritte Probe einschließt, die in dieser Reihenfolge eingeführt werden,
die Steuerung (90) Vorgänge des ersten Zusetzers (13), des zweiten Zusetzers (23) und des Schüttlers derart steuert, dass das erstmalige Schütteln für die zweite Probe parallel zu dem Zusatz des ersten Zusatzstoffes zu der dritten Probe ausgeführt wird,
der Schüttler nur ein einziger Schüttler ist, der das erstmalige Schütteln und das zweitmalige Schütteln in Bezug auf jede Probe ausführt, und
die Steuerung (90) Vorgänge des ersten Zusetzers (13), des zweiten Zusetzers (23) und des Schüttlers derart steuert, dass das zweitmalige Schütteln für die erste Probe ferner parallel zu dem Zusatz des ersten Zusatzstoffes zu der dritten Probe ausgeführt wird, nachdem das erstmalige Schütteln für die zweite Probe und der Zusatz des zweiten Zusatzstoffes zu der ersten Probe abgeschlossen sind.

2. Vorverarbeitungsvorrichtung (100) nach Anspruch 1, wobei
die Steuerung (90) Vorgänge des ersten Zusetzers (13), des zweiten Zusetzers (23) und des Schüttlers derart steuert, dass der Zusatz des zweiten Zusatzstoffes zu der ersten Probe parallel zu dem Zusatz des ersten Zusatzstoffes zu der zweiten Probe ausgeführt wird.

3. Vorverarbeitungsvorrichtung (100) nach Anspruch 1, wobei
die Steuerung (90) Vorgänge des ersten Zusetzers (13), des zweiten Zusetzers (23) und des Schüttlers derart steuert, dass das erstmalige Schütteln für die zweite Probe und der Zusatz des zweiten Zusatzstoffes zu der ersten Probe parallel zu dem Zusatz des ersten Zusatzstoffes zu der dritten Probe ausgeführt werden.

4. Vorverarbeitungsvorrichtung (100) nach Anspruch 1, wobei
der Zusatz des ersten Zusatzstoffes der Zusatz eines internen Standards ist und eine für den Zusatz des ersten Zusatzstoffes erforderliche Zeitspanne länger als eine für das erstmalige Schütteln erforderliche Zeitspanne ist.

5. Vorverarbeitungsvorrichtung (100) nach Anspruch 1, ferner umfassend:
einen ersten Separator (31), der eine Zentrifugation an jeder Probe ausführt, an der das zweitmalige Schütteln ausgeführt wurde; und
eine Abgabevorrichtung (50, 60), die jede Probe abgibt, an der durch den ersten Separator (31) eine Zentrifugation ausgeführt wurde.

6. Vorverarbeitungsvorrichtung (100) nach Anspruch 5, ferner umfassend einen Roboterarm (40, 50, 60) oder einen Bandförderer, der jede Probe hält und transportiert, wobei
die Steuerung (90) einen Vorgang des Roboterarms (40, 50, 60) oder des Förderers derart steuert, dass die erste Probe während eines Zeitraums, in dem der erste Zusatzstoff durch den ersten Zusetzer (13) zu der dritten Probe hinzugefügt wird, von dem Schüttler zu dem zweiten Zusetzer (23) transportiert wird.

7. Vorverarbeitungsvorrichtung (100) nach Anspruch 6, wobei
die Steuerung (90) einen Vorgang des Roboterarms (40, 50, 60) oder des Bandförderers derart steuert, dass die zweite Probe, deren erstmaliges Schütteln abgeschlossen ist, auf einem Platzierungsabschnitt platziert wird, der in dem Schüttler bereitgestellt ist, und die erste Probe während des Zusatzes des ersten Zusatzstoffes zu der dritten Probe durch den ersten Zusetzer (13) von dem zweiten Zusetzer (23) zu dem Schüttler transportiert wird.

8. Vorverarbeitungsvorrichtung (100) nach Anspruch 6, wobei
die Steuerung (90) einen Vorgang des Roboterarms (40, 50, 60) oder des Bandförderers derart steuert, dass die erste Probe, deren zweitmaliges Schütteln abgeschlossen ist, von dem Schüttler zu dem ersten Separator (31) transportiert wird.

9. Vorverarbeitungsvorrichtung (100) nach Anspruch 5, wobei
die Vielzahl von Proben jeweils in einer Vielzahl von Probenflaschen (2) enthalten ist, an denen jeweils Kappen befestigbar sind,
die Vorverarbeitungsvorrichtung (100) ferner einschließt
eine erste Transporteinrichtung, die eine beliebige der Vielzahl von Probenflaschen (2) von dem ersten Separator (31) zu der Abgabevorrichtung (50, 60) transportiert,
eine zweite Transporteinrichtung, die eine weitere der Vielzahl von Probenflaschen (2) von der ersten Trenneinrichtung (31) zu der Abgabeeinrichtung (50, 60) transportiert,
eine erste Befestigungs- und Löseeinrichtung, die die Kappe (3) an einer durch die erste Transporteinrichtung transportierten Probenflasche (2) befestigt oder die Kappe (3) von dieser löst, und
eine zweite Befestigungs-/Löseeinrichtung, die die Kappe (3) an einer durch die zweite Transporteinrichtung transportierten Probenflasche (2) befestigt oder die Kappe (3) von dieser löst,
wobei die Vielzahl von Probenflaschen (2) eine erste Probenflasche und eine zweite Probenflasche einschließt, die jeweils die erste Probe und die zweite Probe enthalten, und
die Steuerung (90) Vorgänge der ersten Transporteinrichtung, der ersten Befestigungs-Löseeinrichtung und der Abgabeeinrichtung (50, 60) derart steuert, dass das Lösen der Kappe (3), das Abgeben der ersten Probe und das Befestigen der Kappe (3) in Bezug auf die erste Probenflasche nacheinander ausgeführt werden, und
Vorgänge der zweiten Transporteinrichtung und der zweiten Befestigungs- und Löseeinrichtung derart steuert, dass die Kappe (3) von der zweiten Probenflasche parallel zu dem Abgeben der ersten Probe durch die Abgabevorrichtung (50, 60) gelöst wird.

10. Vorverarbeitungsvorrichtung (100) nach Anspruch 9, wobei
die Vielzahl von Probenflaschen (2) ferner eine dritte Probenflasche einschließt, die die dritte Probe enthält, und
die Steuereinrichtung (90) Vorgänge der zweiten Transporteinrichtung, der zweiten Befestigungs-Löseeinrichtung und der Abgabeeinrichtung (50, 60) derart steuert, dass das Abgeben der zweiten Probe und das Befestigen der Kappe (3) in Bezug auf die zweite Probenflasche nacheinander ausgeführt werden, und
Vorgänge der ersten Transporteinrichtung und der ersten Befestigungs-/Löseeinrichtung derart steuert, dass die Kappe (3) von der dritten Probenflasche parallel zu dem Abgeben der zweiten Probe durch die Abgabeeinrichtung (50, 60) abgenommen wird.

11. Vorbehandlungsvorrichtung (100) nach Anspruch 5, ferner umfassend einen zweiten Separator (74), der eine Zentrifugation an jeder Probe ausführt, an der durch die Abgabevorrichtung (50, 60) das Abgeben ausgeführt wurde.

12. Vorverarbeitungsvorrichtung (100) nach Anspruch 1, wobei
die Vorverarbeitungsvorrichtung (100) unter Verwendung eines QuEChERS-Verfahrens die Vorverarbeitung an der Vielzahl von Proben durchführt.

13. Vorverarbeitungsverfahren zum Durchführen der Vorverarbeitung an einer Vielzahl von Proben, die nacheinander eingeführt werden, einschließlich der Schritte:
sequenzielles Zusetzen eines ersten Zusatzstoffes zu der Vielzahl von Proben unter Verwendung eines ersten Zusetzers (13);
sequenzielles Ausführen eines erstmaligen Schüttelns unter Verwendung eines Schüttlers in Bezug auf die Vielzahl von Proben, zu denen der erste Zusatzstoff zusetzt wurde;
sequenzielles Zusetzen eines zweiten Zusatzstoffes unter Verwendung eines zweiten Zusetzers (23) zu der Vielzahl von Proben, an denen das erstmalige Schütteln ausgeführt wurde; und
sequenzielles Ausführen eines zweitmaligen Schüttelns unter Verwendung des Schüttlers in Bezug auf die Vielzahl von Proben, zu denen der zweite Zusatzstoff zusetzt wurde, wobei
die Vielzahl von Proben eine erste Probe, eine zweite Probe und eine dritte Probe einschließt, die in dieser Reihenfolge eingeführt werden,
das erstmalige Schütteln für die zweite Probe parallel zu dem Zusatz des ersten Zusatzstoffes zu der dritten Probe ausgeführt wird,
der Schüttler nur ein einziger Schüttler ist, der das erstmalige Schütteln und das zweitmalige Schütteln in Bezug auf jede Probe ausführt, und
das zweitmalige Schütteln der ersten Probe ferner parallel zu dem Zusatz des ersten Zusatzstoffes zu der dritten Probe ausgeführt wird, nachdem das erstmalige Schütteln der zweiten Probe und der Zusatz des zweiten Zusatzstoffes zu der ersten Probe abgeschlossen sind.

14. Vorverarbeitungsverfahren nach Anspruch 13, wobei
das erstmalige Schütteln für die zweite Probe und der Zusatz des zweiten Zusatzstoffes zu der ersten Probe parallel zu dem Zusatz des ersten Zusatzstoffes zu der dritten Probe ausgeführt werden.

## Revendications

1. Dispositif de prétraitement (100) qui effectue un prétraitement sur une pluralité d'échantillons qui sont introduits séquentiellement, comprenant :
un premier additionneur (13) qui ajoute un premier additif à chaque échantillon ;
un second additionneur (23) qui ajoute un second additif à chaque échantillon ;
un agitateur qui secoue chaque échantillon ; et
un dispositif de commande (90) qui commande les opérations du premier additionneur (13), du second additionneur (23) et de l'agitateur de telle sorte que l'ajout du premier additif, la première agitation, l'ajout du second additif et la seconde agitation sont effectués séquentiellement par rapport à un même échantillon, dans lequel
la pluralité d'échantillons comporte un premier échantillon, un deuxième échantillon et un troisième échantillon qui sont introduits dans cet ordre,
le dispositif de commande (90) commande les opérations du premier additionneur (13), du second additionneur (23) et de l'agitateur de telle sorte que la première agitation pour le deuxième échantillon est effectuée en parallèle avec l'ajout du premier additif au troisième échantillon,
l'agitateur n'est qu'un seul agitateur qui effectue la première agitation et la seconde agitation par rapport à chaque échantillon, et
le dispositif de commande (90) commande les opérations du premier additionneur (13), du second additionneur (23) et de l'agitateur de telle sorte que la seconde agitation pour le premier échantillon est en outre effectuée en parallèle avec l'ajout du premier additif au troisième échantillon après la fin de la première agitation pour le deuxième échantillon et de l'ajout du second additif au premier échantillon.

2. Dispositif de prétraitement (100) selon la revendication 1, dans lequel
le dispositif de commande (90) commande les opérations du premier additionneur (13), du second additionneur (23) et de l'agitateur de telle sorte que l'ajout du second additif au premier échantillon est effectué en parallèle avec l'ajout du premier additif au deuxième échantillon.

3. Dispositif de prétraitement (100) selon la revendication 1, dans lequel
le dispositif de commande (90) commande les opérations du premier additionneur (13), du second additionneur (23) et de l'agitateur de telle sorte que l'agitation pour la première fois pour le deuxième échantillon et l'ajout du deuxième additif au premier échantillon sont effectuées en parallèle avec l'ajout du premier additif au troisième échantillon.

4. Dispositif de prétraitement (100) selon la revendication 1, dans lequel
l'ajout du premier additif est l'ajout d'un étalon interne, et un laps de temps requis pour l'ajout du premier additif est plus long qu'un laps de temps requis pour la première agitation.

5. Dispositif de prétraitement (100) selon la revendication 1, comprenant en outre :
un premier séparateur (31) qui effectue une centrifugation sur chaque échantillon sur lequel la seconde agitation a été effectuée ; et
un distributeur (50, 60) qui distribue chaque échantillon sur lequel une centrifugation a été effectuée par le premier séparateur (31).

6. Dispositif de prétraitement (100) selon la revendication 5, comprenant en outre un bras robotisé (40, 50, 60) ou un transporteur à courroie qui contient et transporte chaque échantillon, dans lequel
le dispositif de commande (90) commande un fonctionnement du bras robotique (40, 50, 60) ou du transporteur de telle sorte que le premier échantillon est transporté de l'agitateur au second additionneur (23) pendant une période au cours de laquelle le premier additif est ajouté au troisième échantillon par le premier additionneur (13).

7. Dispositif de prétraitement (100) selon la revendication 6, dans lequel
le dispositif de commande (90) commande un fonctionnement du bras de robot (40, 50, 60) ou du transporteur à courroie de telle sorte que le deuxième échantillon dont la première agitation est terminé est placé sur une partie de placement fournie dans l'agitateur et le premier échantillon est transporté du second additionneur (23) vers l'agitateur, pendant l'addition du premier additif au troisième échantillon par le premier additionneur (13).

8. Dispositif de prétraitement (100) selon la revendication 6, dans lequel
le dispositif de commande (90) commande un fonctionnement du bras robotisé (40, 50, 60) ou du transporteur à courroie de telle sorte que le premier échantillon dont la seconde agitation est terminée est transporté de l'agitateur vers le premier séparateur (31).

9. Dispositif de prétraitement (100) selon la revendication 5, dans lequel
la pluralité d'échantillons sont respectivement contenus dans une pluralité de flacons échantillons (2) auxquels des bouchons peuvent être fixés respectivement,
le dispositif de prétraitement (100) comporte en outre
un premier transporteur qui transporte l'un quelconque de la pluralité de flacons échantillons (2) du premier séparateur (31) au distributeur (50, 60),
un second transporteur qui transporte un autre de la pluralité de flacons échantillons (2) du premier séparateur (31) au distributeur (50, 60),
un premier attacheur-détacheur qui fixe le bouchon (3) à ou détache le bouchon (3) d'un flacon échantillon (2) transporté par le premier transporteur, et
un second attacheur-détacheur qui fixe le bouchon (3) à ou détache le bouchon (3) d'un flacon échantillon (2) transporté par le second transporteur,
la pluralité de flacons échantillons (2) comportent un premier flacon échantillon et un second flacon échantillon qui contiennent respectivement le premier échantillon et le deuxième échantillon, et
le dispositif de commande (90) commande des opérations du premier transporteur, du premier attacheur-détacheur et dudistributeur (50, 60) de telle sorte que le détachement du bouchon (3), la distribution du premier échantillon et la fixation du bouchon (3) sont effectuées séquentiellement par rapport au premier flacon d'échantillon, et
commande des opérations du second transporteur et du second attacheur-détacheur de telle sorte que le bouchon (3) est détaché du second flacon d'échantillon parallèlement à la distribution du premier échantillon par le distributeur (50, 60).

10. Dispositif de prétraitement (100) selon la revendication 9, dans lequel
la pluralité de flacons échantillons (2) comportent en outre un troisième flacon échantillon qui contient le troisième échantillon, et
le dispositif de commande (90) commande les opérations du second transporteur, du second attacheur-détacheur et du distributeur (50, 60) de telle sorte que la distribution du deuxième échantillon et la fixation du bouchon (3) sont effectuées séquentiellement par rapport au second flacon échantillon, et
commande des opérations du premier transporteur et du premier attacheur-détacheur de telle sorte que le bouchon (3) est détaché du troisième flacon échantillon parallèlement à la distribution du deuxième échantillon par le distributeur (50, 60).

11. Dispositif de prétraitement (100) selon la revendication 5, comprenant en outre un second séparateur (74) qui effectue une centrifugation sur chaque échantillon sur lequel une distribution a été effectuée par le distributeur (50, 60).

12. Dispositif de prétraitement (100) selon la revendication 1, dans lequel
le dispositif de prétraitement (100) effectue un prétraitement sur la pluralité d'échantillons à l'aide d'un procédé QuEChERS.

13. Procédé de prétraitement permettant d'effectuer un prétraitement sur une pluralité d'échantillons qui sont introduits séquentiellement, comportant les étapes consistant à :
l'ajout séquentiel d'un premier additif à la pluralité d'échantillons à l'aide d'un premier additionneur (13) ;
la réalisation séquentielle d'une première agitation à l'aide d'un agitateur par rapport à la pluralité d'échantillons auxquels le premier additif a été ajouté ;
l'ajout séquentiel d'un second additif à l'aide d'un second additionneur (23) à la pluralité d'échantillons sur lesquels la première agitation a été effectuée ; et
la réalisation séquentielle d'une seconde agitation à l'aide de l'agitateur par rapport à la pluralité d'échantillons auxquels le second additif a été ajouté, dans lequel
la pluralité d'échantillons comporte un premier échantillon, un deuxième échantillon et un troisième échantillon qui sont introduits dans cet ordre,
la première agitation pour le deuxième échantillon est effectuée en parallèle avec l'ajout du premier additif au troisième échantillon,
l'agitateur n'est qu'un seul agitateur qui effectue la première agitation et la seconde agitation par rapport à chaque échantillon, et
la seconde agitation pour le premier échantillon est en outre effectuée parallèlement à l'ajout du premier additif au troisième échantillon après la fin de la première agitation pour le deuxième échantillon et de l'ajout du deuxième additif au premier échantillon.

14. Procédé de prétraitement selon la revendication 13, dans lequel
la première agitation pour le deuxième échantillon et l'ajout du deuxième additif au premier échantillon sont effectués parallèlement à l'ajout du premier additif au troisième échantillon.
